# EUROPÄISCHE PATENTSCHRIFT

(11) **EP 3 213 803 B1**
(45) Veröffentlichungstag und Bekanntmachung des Hinweises auf die Patenterteilung: **12.08.2020**
(21) Anmeldenummer: 16206974.4
(22) Anmeldetag: 27.12.2016
(51) Int. Cl.: B01D 29/33, B01D 29/66, B01D 29/70, B01D 29/92, E03B 7/07

(54) **FILTER-ANORDNUNG**
FILTER ASSEMBLY
SYSTÈME DE FILTRE

(30) Priorität: 04.03.2016 DE 202016101180 U
(43) Veröffentlichungstag der Anmeldung: 06.09.2017
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 2 952 239
- EP-A2- 0 378 516
- WO-A1-2008/046442
- DE-A1-102006 036 123
- DE-U1-202014 102 880

## Beschreibung

### Technisches Gebiet

Die Erfindung betrifft einen Rückspülfilter zum Filtern von Trink- oder Brauchwasser, welcher von einer Betriebsstellung, bei welcher Wasser vom Einlass durch den Filter zum Auslass geleitet wird, zum Rückspülen in eine Rückspülstellung umschaltbar ist, bei welcher Wasser vom Einlass in umgekehrter Richtung durch den Filter zu einem geöffneten Ablauf leitbar ist, enthaltend:
(a) eine Anschlussarmatur mit einem Einlass und einem Auslass;
(b) eine Filtertasse mit einem verschließbaren Ablauf;
(c) ein zwischen einem oberen und einem unteren Anschlag axialbeweglich geführtes Filterelement mit einem oberen Filterabschnitt und einem unteren Filterabschnitt und einem um das Filterelement herum angeordneten, mit dem Einlass verbindbaren Ringraum;
(d) Mittel zum Trennen des Ringraums derart, dass der untere Filterabschnitt in der Betriebsstellung und der obere Filterabschnitt in der Rückspülstellung mit dem Einlass verbindbar ist und von außen nach innen durchflossen wird; und
(e) einen um die Längsachse des Filterelements drehbaren Impeller innerhalb des Filterelements, durch welchen in der Rückspülstellung Wasser von Innen nach Außen durch einen verringerten Winkelbereich des unteren Filterabschnitts leitbar ist.

Wasserfilter dienen dazu, Trink- oder Brauchwasser zu filtern. Dabei bleiben Schmutzpartikel im Filtermaterial hängen. Mit der Zeit setzt sich das Filtermaterial zu. Dann gelangt weniger oder gar kein Wasser mehr durch den Filter. Es ist also erforderlich, den Filter regelmäßig zu reinigen oder zu erneuern. Es gibt Filter mit Filtermaterial, das vollständig ausgetauscht wird. Bei Rückspülfiltern wird die Strömung durch das Filtermaterial regelmäßig umgekehrt. Dann werden die Schmutzpartikel im Filtermaterial von der Strömung mitgerissen und das Rückspülwasser durch einen Ablauf entsorgt.

Mit einem Impeller wird das Wasser durch Düsen oder Öffnungen geleitet, die nur einen begrenzten Winkelbereich abdecken. Dadurch wird das Wasser auf diesen Winkelbereich konzentriert. Die Strömungsgeschwindigkeit und damit die Reinigungswirkung bei der Rückspülung ist dann höher. Der Impeller wird in Rotation versetzt, so dass alle Winkelbereiche des Filterelements erreicht werden.

### Stand der Technik

Unter dem Handelsnamen "Drufi" vertreibt die Anmelderin Druckminderer-Filterkombinationen, bei denen ein Druckminderer im Innenraum eines zylindrischen Filters angeordnet ist.

DE 10 2009 003 343 A1 der Anmelderin offenbart einen Filter, bei dem ein Druckminderer in einem Rückspülfilter angeordnet ist. EP 0 378 516 A2 offenbart einen Rückspülfilter mit einem oberen Filterelement, das einen kleineren Durchmesser hat und einem unteren Filterelement, das einen größeren Durchmesser hat. In der Rückspülstellung werden die Filterelemente hydraulisch und mit Bürsten gereinigt.

EP 1 688 170 B1 der Anmelderin offenbart eine Filterarmatur mit Strömungszähler. Die Filterarmatur ist ein Rückspülfilter, bei dem zwei Filter vorgesehen sind. Ein erster Filter zum Filtern des Wassers in einer Betriebsstellung und ein zweiter Filter zum Filtern des für die Rückspülung vorgesehenen Wassers. Nachteilig bei der bekannten Anordnung ist es, dass sich vor allem bei stark verschmutztem Wasser auch der zweite Filter mit der Zeit zusetzt.

EP 2 952 239 A1 offenbart eine Filterarmatur mit Impeller, bei dem ein Filtereinsatz mittels einer horizontalen Wandung in zwei Teile geteilt ist. Der Filtereinsatz hat über die gesamte Höhe den gleichen Durchmesser. Der Impeller erstreckt sich durch die horizontale Wandung von einer unteren Filterkammer in eine obere Filterkammer. Zwischen der oberen und unteren Filterkammer ist ein Ventil angeordnet, über welches das Wasser in der Betriebsstellung von der unteren in die obere Filterkammer fließen kann. Die bekannte Anordnung ist kompliziert aufgebaut. Am Ventil und an der horizontalen Wandung erfolgt ein hoher Druckabfall. Das ist unerwünscht.

### Offenbarung der Erfindung

Es ist Aufgabe der Erfindung, einen Rückspülfilter mit verbesserter Rückspülung zu schaffen, der einfach und kostengünstig herstellbar ist und in der Betriebsstellung einen geringen Strömungswiderstand hat.

Erfindungsgemäß wird die Aufgabe mit einem Rückspülfilter der eingangs genannten Art dadurch gelöst, dass
(f) der obere Filterabschnitt einen kleineren Durchmesser hat als der untere Filterabschnitt, so dass zwischen oberem und unterem Filterabschnitt eine Ringschulter gebildet ist, und
(g) der Impeller in axialer Richtung gehäusefest ist und einen zylindrischen, oben offenen Körper aufweist, dessen Durchmesser größer ist, als der Durchmesser des oberen Filterabschnitts und kleiner als der Durchmesser des unteren Filterabschnitts.

Die Abmessungen des erfindungsgemäßen Impellers sind gerade so gewählt, dass die Ringschulter von oben auf den oberen Rand des Impellers trifft, wenn das Filterelement nach unten in die Rückspülstellung bewegt wird. Dann fließt Wasser vom oberen Filterabschnitt in den unteren Filterabschnitt vollständig in den Impeller. Umgekehrt fließt das Wasser ohne Strömungswiderstand und praktisch ohne Druckabfall in der Betriebsstellung vom unteren Filterabschnitt in den oberen Filterabschnitt.

Vorteilhafterweise ist vorgesehen, dass der Impeller eine oder mehrere Flachdüsen auf der Außenseite des zylindrischen Körpers aufweist, die mit dem Innenraum des Impellers in Verbindung stehen. Unter Flachdüse wird eine langgestreckte Düse, beispielsweise ein hohler, rechteckiger Vorsprung mit langgestrecktem Öffnungsquerschnitt verstanden. Statt einer einzigen, langgestreckten Öffnung können auch mehrere langgestreckte Öffnungen oder eine Vielzahl von runden Öffnungen in linearer, spiralförmiger oder ähnlicher Anordnung verwendet werden. Wichtig ist, dass nicht die gesamte Filterfläche abgedeckt ist, sondern nur ein Teil, so dass eine erhöhte Strömungsgeschwindigkeit erreicht wird.

Vorteilhafterweise sind die Flachdüsen derart am Impeller angeformt, dass ausströmendes Rückspülwasser schräg unter einem Winkel von Innen auf den unteren Filterabschnitt trifft, der ungleich 90° ist, vorzugsweise zwischen 5° und 75° und höchst vorzugsweise zwischen 30° und 50° bezogen auf die Tangente im Auftreffpunkt, so dass das Rückspülwasser den Impeller in Rotation versetzt. Die schräg angestellten Flachdüsen sind besonders einfach aufgebaut und langlebig und erfordern keine weiteren Handlungen während des Rückspülens.

Bei einer weiteren Ausgestaltung der Erfindung sind mehrere, in axialer Richtung versetzte Flachdüsen vorgesehen sind, welche die Höhe des unteren Filterabschnitts abdecken. So kann eine Flachdüse im unteren Bereich und eine Flachdüse im oberen Bereich vorgesehen sein. Die Verteilung ermöglicht dass eine minimale Anzahl an Flachdüsen in Umfangsrichtung winkelversetzt sind, so dass sich die lateralen Kräfte auf den Impeller kompensieren.

Bei einer besonders vorteilhaften Ausgestaltung der Erfindung umfassen die Mittel zum Trennen des Ringraums einen Ringvorsprung außen auf dem Filterelement zwischen dem oberen Filterabschnitt und dem unteren Filterabschnitt, der mit einer Schulter oder einem Ringvorsprung auf der Innenwandung der Filtertasse derart zusammenwirkt, dass
(i) die Verbindung vom Einlass zum Ringraum um den unteren Filterabschnitt in einer oberen Stellung des Filterelements geöffnet ist und in einer unteren Stellung des Filterelements blockiert ist; und
(ii) die Verbindung vom Einlass zum Bereich um den oberen Filterabschnitt in der oberen Stellung des Filterelements blockiert ist und der unteren Stellung des Filterelements geöffnet ist.

Der Ringvorsprung am Filterelement oder der Ringvorsprung oder die Schulter an der Filtertasse kann dabei insbesondere mit einer Dichtung versehen sein. Der Ringvorsprung wirkt dann wie ein Ventil: Die Passage zwischen Filterelement und Filtertasse ist in der oberen Betriebsstellung offen. Der Ringvorsprung trifft in der unteren Rückspülstellung des Filterelements auf den Vorsprung oder die Schulter an der Innenwandung der Filtertasse. Dann fließt kein Wasser vom Einlass an dem Vorsprung vorbei. Gleichzeitig bildet der Ringvorsprung oder die Schulter an der Innenwandung der Filtertasse einen unteren Anschlag für die axiale Bewegung des Filterelements.

Bei einer weiteren Ausgestaltung ist ein Boden zum Verschließen des Filterelements am unteren Ende vorgesehen und eine Feder, welche das Filterelement mit einer Federkraft nach oben beaufschlagt. Der Boden kann an das Filterelement angeformt sein. Er kann aber auch mit einer Dichtung von unten in das Filterelement eingesetzt sein. Die Federkraft kann direkt oder indirekt auf den Boden wirken.

Bei einer weiteren Ausgestaltung der Erfindung ist ein mit dem Filterelement axialbewegliches Ventilglied vorgesehen, welches die Verbindung zwischen dem Ringraum um den unteren Filterabschnitt und dem Ablauf kontrolliert, wobei die Verbindung in der Betriebsstellung geschlossen und in der Rückspülstellung geöffnet ist. Ein solches Ventilglied kann von einem Ring gebildet sein, der mit dem Filterelement mitbewegt wird. Der Ring kann außen eine Dichtung aufweisen. Auf der Innenseite der Filtertasse kann ein Vorsprung und/oder ein weiterer Ring vorgesehen sein. Solange der Ring mit der Dichtung sich auf Höhe des Vorsprungs befindet, ist der Ringraum um den unteren Filterabschnitt nach unten geschlossen. Wenn der Ring in der Rückspülstellung nach unten bewegt wird, bildet sich ein Ringspalt, durch den Wasser aus dem Ringraum nach unten abfließen kann.

Eine weitere Ausgestaltung der Erfindung umfasst einen oder mehrere Kanäle zum Verbinden des Bereichs außen um den oberen Filterabschnitt mit dem Bereich unterhalb des unteren Filterabschnitts und zwischen Boden und Ventilglied ein axialverschieblich geführtes, Federkraft-beaufschlagtes Hubelement, welches in einer oberen Endstellung die Kanäle und in einer unteren Endstellung eine im Ventilglied vorgesehene Öffnung verschließt, wobei die auf das Filterelement wirkende Federkraft größer ist, als die auf das Hubelement wirkende Federkraft.

Die Anordnung kann insbesondere einen Ringvorsprung außen auf dem Filterelement zwischen dem oberen Filterabschnitt und dem unteren Filterabschnitt vorsehen zum Trennen des äußeren Ringraums vom Bereich außerhalb des oberen Filterabschnitts, wobei der Ringvorsprung mit einer Schulter auf der Innenwandung der Filtertasse derart zusammenwirkt, dass
(i) die Verbindung vom Einlass zum äußeren Ringraum in einer oberen Stellung des Filterelements geöffnet ist und in einer unteren Stellung des Filterelements blockiert ist;
(ii) die Verbindung vom Einlass zum Bereich außen um den oberen Filterabschnitt in der oberen Stellung des Filterelements blockiert ist und der unteren Stellung des Filterelements geöffnet ist; und
(iii) die Verbindung vom Einlass zum äußeren Ringraum in einer Zwischenstellung des Filterelements geöffnet ist, während die Verbindung vom Einlass zum Bereich außen um den oberen Filterabschnitt blockiert ist.

Die Erfindung kann ferner einen oder mehrere Kanäle umfassen zum Verbinden des Bereichs außen um den oberen Filterabschnitt mit dem Bereich unterhalb des unteren Filterabschnitts; ein Federkraft-beaufschlagtes Bodenteil zum Verschließen des Filterelements am unteren Ende mit Öffnungen zum Verbinden des Innenraums des Filterelements mit dem mit dem Ablauf verbundenen Bodenbereich der Filtertasse; und ein in dem Bodenteil axialverschieblich geführtes, Federkraft-beaufschlagtes Hubelement, welches in einer ersten Endstellung die Kanäle und in einer zweiten Endstellung die Öffnungen im Bodenteil verschließt, wobei die auf das Bodenteil wirkende Federkraft größer ist, als die auf das Hubelement wirkende Federkraft.

Zusätzlich zur Betriebs- und Rückspülstellung wird dabei eine Zwischenstellung eingenommen, bei der obere Filterabschnitt rückgespült wird. In der Betriebsstellung befindet sich das Filterelement in der oberen Stellung. Dann ist der Einlass mit dem Ringraum verbunden. Vom Ringraum fließt das Wasser durch das Filterelement nach innen und von dort zum Auslass. In der Rückspülstellung befindet sich das Filterelement in einer unteren Stellung. Dann ist die Verbindung zum Ringraum blockiert. Stattdessen fließt das Wasser durch den oberen Filterabschnitt nach innen und im unteren Filterabschnitt wieder in umgekehrter Richtung, d.h. in Rückspülrichtung nach außen in den Ringraum, weil die Öffnungen im Bodenteil in dieser Stellung verschlossen sind. In der Zwischenstellung ist das Filterelement noch in der oberen Stellung, aber das Hubelement wird durch den Differenzdruck, der bei Öffnen des Ablaufs entsteht, bereits nach unten bewegt. In dieser Stellung werden die Kanäle freigegeben. Wasser kann durch den Ringraum in das Innere des Filterelements fließen und in umgekehrter Richtung aus dem oberen Filterabschnitt wieder heraus. Dabei wird der obere Filterabschnitt rückgespült. Das dabei entstehende Rückspülwasser fließt durch die Kanäle am unteren Filterabschnitt vorbei und durch die freien Öffnungen nach unten zum Ablauf.

Jedes Mal, wenn der untere Filterabschnitt durch Öffnen des Ablaufs rückgespült wird, erfolgt vorher eine Rückspülung des oberen Filterabschnitts. Die Federkraft auf das Hubteil ist etwas geringer als die Federkraft auf das Filterelement. Wenn der Ablauf geöffnet wird, entsteht ein geringer Differenzdruck. Dabei wird aufgrund der geringen Federkraft zunächst das Hubteil nach unten bewegt und öffnet die Kanäle. Wenn der Ablauf vollständig geöffnet wird und der Differenzdruck steigt wird das Hubteil bis in seine untere Endstellung bewegt, wo zwar die Kanäle weiterhin offen sind, aber die Öffnungen nach unten vollständig verschlossen sind. Dadurch wird erreicht, dass der volle Differenzdruck wirkt. Das Filterelement wird nach unten bewegt und die Rückspülstellung erreicht.

Die Verwendung zweier Filterabschnitte ermöglicht es, während einer Zwischenstellung auch den Rückspülfilter zu reinigen. Das Wasser fließt in umgekehrter Richtung von innen nach außen durch den oberen Filterabschnitt. Der Bereich außen um den oberen Filterabschnitt ist im wesentlichen geschlossen. Nur die Kanäle stellen eine Verbindung mit dem Bereich unterhalb des Filterelements her. In der Betriebsstellung ist das Hubelement in einer oberen Stellung und verschließt den unteren Ausgang der Kanäle. In der Rückspülstellung verschließt das Hubelement eine im Ventilglied vorgesehene Öffnung. In der Zwischenstellung sind die Kanäle und die Öffnung im Ventilglied offen. Dann fließt das Rückspülwasser durch den oberen Filterabschnitt und die Kanäle durch die Öffnung im Ventilglied zum geöffneten Ablauf.

Eine besonders kompakte Anordnung wird erreicht, wenn die Anschlussarmatur einen äußeren und einen koaxialen inneren Stutzen aufweist, wobei der Innenbereich des inneren Stutzens mit dem Auslass verbunden ist und der Innenbereich des äußeren Stutzens mit dem Einlass verbunden ist, und der innere Stutzen sich bis zum koaxial dazu angeordnete Filterelement erstreckt. Wasser, das vom Inneren des Filterelements nach oben fließt, gelangt dann vollständig in den inneren Stutzen und dient entweder zum Zapfen oder zum Rückspülen des unteren Filterabschnitts.

Das Filterelement kann mehrere vertikale Streben aufweisen und wenigstens ein Teil der Streben kann zusätzlich mit einem Kanal versehen sein, der über eine Bohrung den Bereich außerhalb des oberen Filterabschnitts mit dem Bereich unterhalb des Bodens verbindet. Es ist aber je nach Anwendung auch jede andere Form eines Filters geeignet.

Der Ablauf kann im Boden der Filtertasse angeordnet und mit einem Absperrhahn verschließbar sein. Es versteht sich aber, dass ein Kugelhahn hierfür besonders gut geeignet ist, aber auch jede andere Art der Absperrung - manuell oder automatisch betätigt - für diese Verwendung geeignet ist.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen insbesondere DIN EN 806-1 und DIN EN 1717 und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Deutscher Verein des Gas- und Wasserfaches e.V. oder Verein Deutscher Ingenieure, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrunde gelegt:
- Armatur:: ist ein Bauteil zur Installation in oder an einer Rohrleitung oder anderen Fluidinstallation zum Absperren, Regeln oder Beeinflussen von Stoffströmen. Eine Armatur kann einteilig oder mehrteilig ausgebildet sein und wird an einer Stelle in oder an der Rohrleitung installiert. Armaturen sind beispielsweise und nicht abschließend: Anschlussvorrichtungen, Anschlussarmaturen, Hauptabsperrarmaturen, Wartungsarmaturen, Drosselarmaturen, Entnahmestellen, Entnahmearmaturen, Entleerungsarmaturen, Sicherungsarmaturen, Sicherheitsarmaturen und Stellarmaturen.
- Auslass: ist eine ablaufseitige Öffnung in einem Gehäuse, aus welcher ein Stoffstrom herausfließen kann. Die Öffnung kann insbesondere an eine Rohrleitung oder eine weitere Armatur angeschlossen sein oder frei zur Atmosphäre hin öffnen.
- axial: ist die Richtung der Rotationsachse von ganz oder teilweise rotationssymmetrischen Bauteilen, wie etwas Rohren oder langgestreckten Gehäusen. Bei Bauteilen ohne Rotationssymmetrie ist es die Hauptströmungsrichtung in einem Bauteilabschnitt.
- Bohrung: ist jede Art von Verbindung zweier Hohlräume, sowie Sacklöcher.
- Druck: Kraft pro Flächeneinheit
- Druckminderer: ist eine Armatur zur Einstellung eines ausgewählten Drucks an dahinterliegenden Bauteilen.
- Einlass: ist eine zulaufseitige Öffnung in einem Gehäuse, in welchen ein Stoffstrom hineinfließen kann. Die Öffnung kann insbesondere an eine Rohrleitung oder eine weitere Armatur angeschlossen sein oder frei zur Atmosphäre hin öffnen.
- Feder: elastisches Bauteil, dass sich verformen lässt, insbesondere aber nicht ausschließlich metallische Schraubenfeder
- Filter: ist eine Einrichtung, mit welcher Feststoffe aus einem Fluidstrom zurückgehalten werden.
- Gehäuse: Begrenzung für Stoffe, Bauteile, Instrumente und Messgeräte nach außen. Ein Gehäuse kann einteilig oder aus mehreren verbundenen Gehäuseteilen mehrteilig ausgebildet sein und aus einem oder mehreren Materialien bestehen.
- radial: senkrecht zu einer axialen Richtung.
- Rohr: Hohlkörper aus zylindrischen Abschnitten. Dient üblicherweise als Rohrleitung.
- Rückspülen: Durchströmen einer Komponente oder von Filtermaterial in umgekehrter Richtung und Ablassen des Spülmediums nach außen
- Rückspülfilter: Filter, welcher durch Rückspülen gereinigt wird.
- Schulter: Übergang von Abschnitten unterschiedlicher Durchmesser oder Dicken.
- Stutzen: Rand oder Übergangsstück an einer Öffnung.
- Ventil: Bauteil zur Absperrung oder Regelung des Durchflusses von Fluiden.

### Kurze Beschreibung der Zeichnungen

- Fig.1: ist ein Querschnitt durch eine Rückspülfilteranordnung mit einem Filter und einem Hilfsfilter zum Filtern des Rückspülwassers in Betriebsstellung entsprechend einem ersten Ausführungsbeispiel.
- Fig.2: ist ein Querschnitt durch die Anordnung aus Figur 1 in einer Zwischenstellung vor dem Rückspülen.
- Fig.3: ist ein Querschnitt durch die Anordnung aus Figur 1 in Rückspülstellung.
- Fig.4: zeigt das Filterelement aus Figur 1 im Detail.
- Fig.5: ist ein Querschnitt durch das Filterelement mit Impeller aus Figur 1 im Detail.
- Fig.6: ist ein horizontaler Querschnitt entlang der Schnittebene A-A der Anordnung aus Figur 1.
- Fig.7: ist eine perspektivische Darstellung des Impellers aus Figur 1 im Detail.
- Fig.8: ist eine aufgeschnittene, perspektivische Darstellung der Anordnung aus Figur 1 in Betriebsstellung.
- Fig.9: ist ein Detail aus Figur 1.
- Fig.10: ist ein Detail aus Figur 3.
- Fig.11: ist ein Querschnitt durch die Anordnung aus Figur 1 entlang einer um die Längsachse winkelversetzten Schnittebene.
- Fig.12: ist eine perspektivische, teilweise im oberen Teil explodierten Zeichnung der Anordnung aus Figur 1.
- Fig.13: ist eine perspektivische, teilweise im unteren Teil explodierte Zeichnung der Anordnung aus Figur 1.
- Fig.14: ist eine Außenansicht einer Filteranordnung nach einem zweiten Ausführungsbeispiel.
- Fig.15: ist ein Querschnitt durch die Filteranordnung aus Figur 14 in der Betriebsstellung.
- Fig.16: ist ein Querschnitt durch die Filteranordnung aus Figur 14 analog zu Figur 15, aber in der Rückspülstellung.
- Fig.17: ist ein Querschnitt durch die Filteranordnung aus Figur 14 analog zu Figur 15 und 16, aber in einer Zwischenstellung zwischen Betriebsstellung und Rückspülstellung.
- Fig.18: ist eine Explosionsdarstellung des Filterelements mit Filterhülse für die Filteranordnung aus Figur 14 bis 17.
- Fig. 19: ist eine perspektivische Darstellung des zusammengebauten Filterelements mit Filterhülse aus Figur 18.
- Fig. 20: ist ein Querschnitt durch das Filterelement mit Filterhülse aus Figur 18 in der Betriebsstellung im Detail.
- Fig.21: ist ein Querschnitt durch das Filterelement mit Filterhülse aus Figur 18 in der Rückspülstellung im Detail.

### Beschreibung der Ausführungsbeispiele

### 1.Ausführungsbeispiel

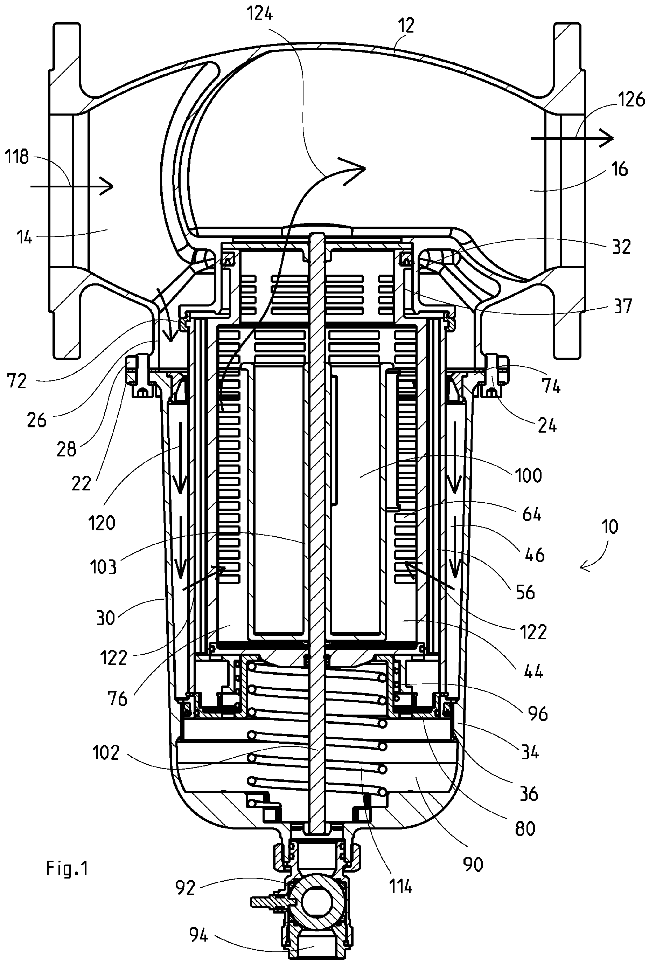

Figur 1 zeigt eine Filteranordnung, die allgemein mit 10 bezeichnet ist. Die Anordnung 10 dient zum Filtern von Trink- oder Brauchwasser. Die Anordnung 10 weist eine Anschlussarmatur mit Gehäuse 12 auf. Das Gehäuse 12 hat einen Einlass 14 und einen Auslass 16, mit dem sie in einer Rohrleitung (nicht dargestellt) montiert werden kann. Im vorliegenden Ausführungsbeispiel ist eine koaxiale Anordnung zwischen Einlass 14 und Auslass 16 vorgesehen, die direkt in die Rohrleitung eingebaut werden kann. Es ist aber auch möglich eine Flanschverbindung zu verwenden, mit der die Anordnung an eine Anschlussarmatur mit einem korrespondierenden Flansch angeflanscht wird. Dann ist der Auslass als Ringkanal ausgebildet, der um einen Einlass in Form eines Zentralkanals herum angeordnet ist oder umgekehrt.

Das Gehäuse 12 weist einen nach unten ragenden äußeren Anschlussstutzen 26 mit einem Ringvorsprung 28 auf. An dem Ringvorsprung 28 ist eine Filtertasse 30 aus transparentem Kunststoff mit korrespondierendem Ringvorsprung 22 angeflanscht. Schrauben 24 dienen der Befestigung. Koaxial zum äußeren Anschlussstutzen 26 bildet das Gehäuse 12 einen inneren Anschlussstutzen 32. Der äußere Anschlussstutzen 26 ist mit dem Einlass 14 verbunden. Der Innenraum 37 des inneren Anschlussstutzens 32 ist mit dem Auslass 16 verbunden.

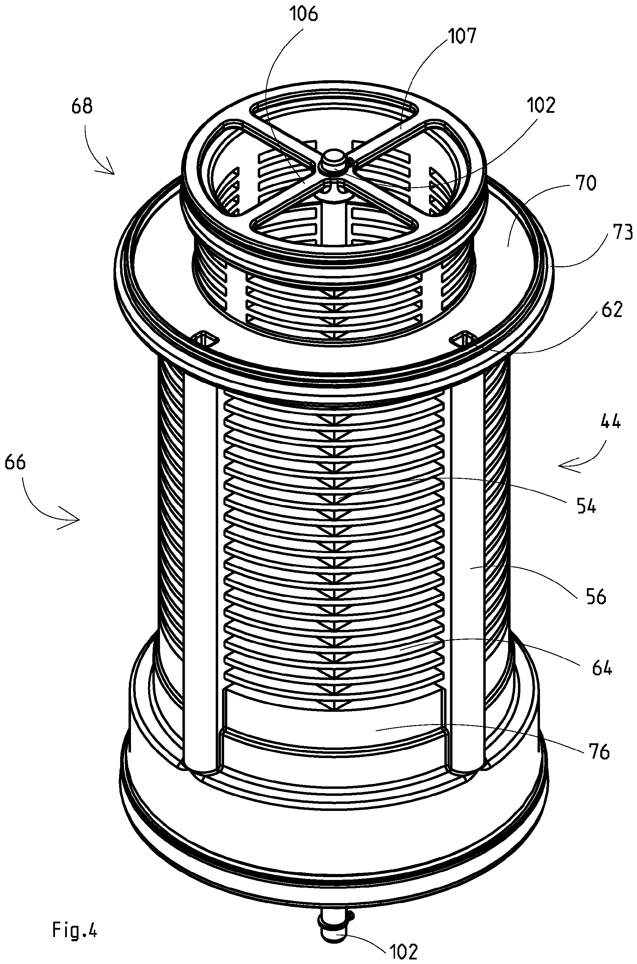

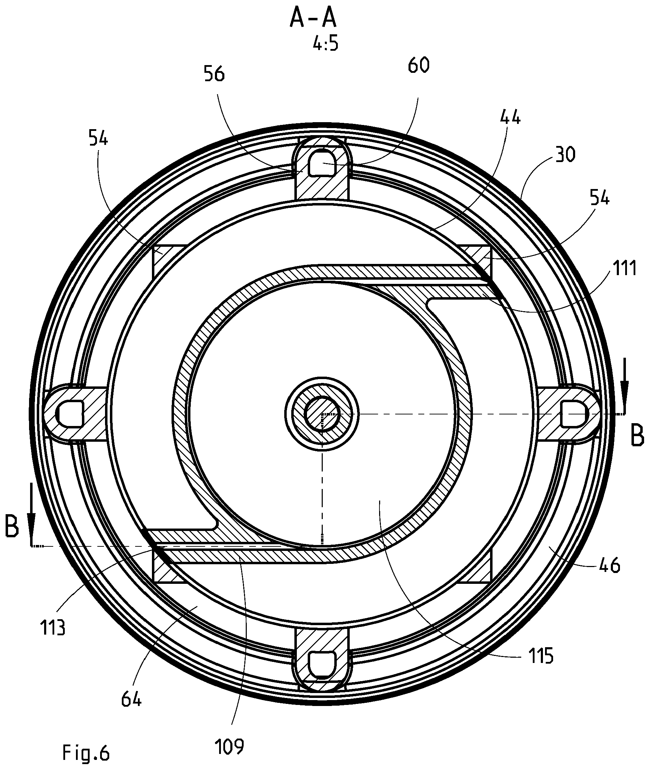

In die Filtertasse 30 ist ein im Wesentlichen zylindrisches Filterelement 44 aus Kunststoff axialbeweglich geführt. Figur 4 bis 6 zeigen das Filterelement 44 im Detail. Das Filterelement 44 weist vertikale Streben 54 und 56 auf. Vier der Streben 54 haben einen dreieckigen Querschnitt, wie dies im Querschnitt in Figur 6 gut zu erkennen ist. Vier paarweise gegenüberliegende Streben 56, haben innen einen in Längsrichtung verlaufenden Kanal 60. Der Kanal 60 erstreckt sich über große Teile der Länge des Filterelements 44, wie in Figur 1 bis 3 gut zu erkennen ist. Am oberen Ende des Kanals 60 ist eine Bohrung 62 vorgesehen, über welche der Kanal 60 mit dem Bereich außerhalb des Filterelements verbunden ist. Diese sind in Figur 4 zu erkennen. Die Kanäle 60 sind nach unten offen.

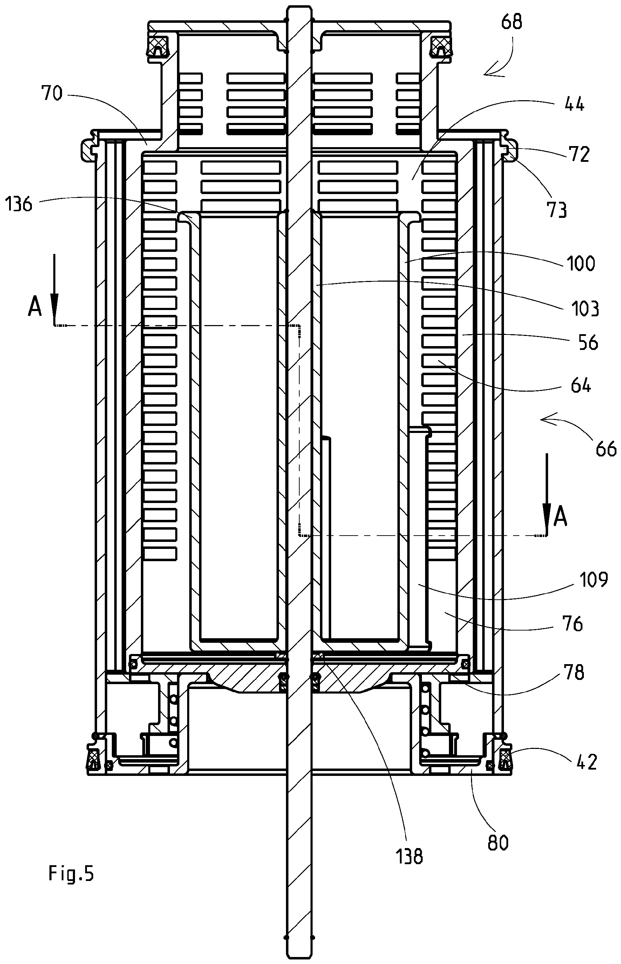

Zwischen den Streben 54 sind Ringsegmente 64 übereinander angeformt. Die Ringsegmente 64 liegen dicht übereinander und bilden kleine Zwischenräume. Zusammen mit den Streben 54 halten die Ringsegmente 64 Schmutzpartikel im Wasser zurück, während das Wasser durch die Zwischenräume fließen kann. Das Filterelement 44 weist in axialer Richtung zwei Filterabschnitte mit Ringsegmenten 64 auf: einen unteren, größeren Filterabschnitt 66 und einen oberen, kleineren Filterabschnitt 68. Der Filterabschnitt 68 ist nicht nur in axialer Richtung kürzer, sondern hat auch einen kleineren Durchmesser, als der untere Filterabschnitt 66. Auf diese Weise wird im Übergangsbereich zwischen den Filterabschnitten eine Schulter 70 gebildet. Dies ist in Figur 4 und 5 gut zu erkennen. Knapp unter der Schulter 70 zwischen den Filterabschnitten 66 und 68 ist außen ein Ringvorsprung 72 angeformt. Um den Ringvorsprung 72 greift eine Dichtung 73.

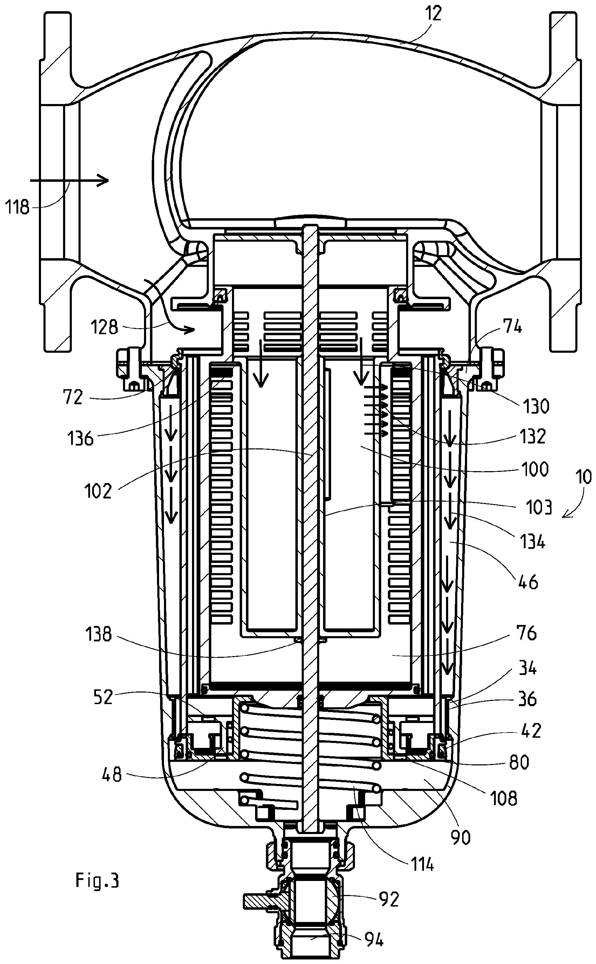

Die Filtertasse 30 weist am oberen Ende der Innenwandung eine Schulter 74 auf. Die Schulter 74 bildet einen Anschlag. Die Bewegung des Filterelements 44 nach unten wird durch die Schulter 74 begrenzt, wenn dort der Ringvorsprung 72 auftrifft. Diese Situation ist in Figur 3 dargestellt. Dann ist die Verbindung zwischen Einlass 14 und dem Inneren der Filtertasse an dieser Stelle unterbrochen.

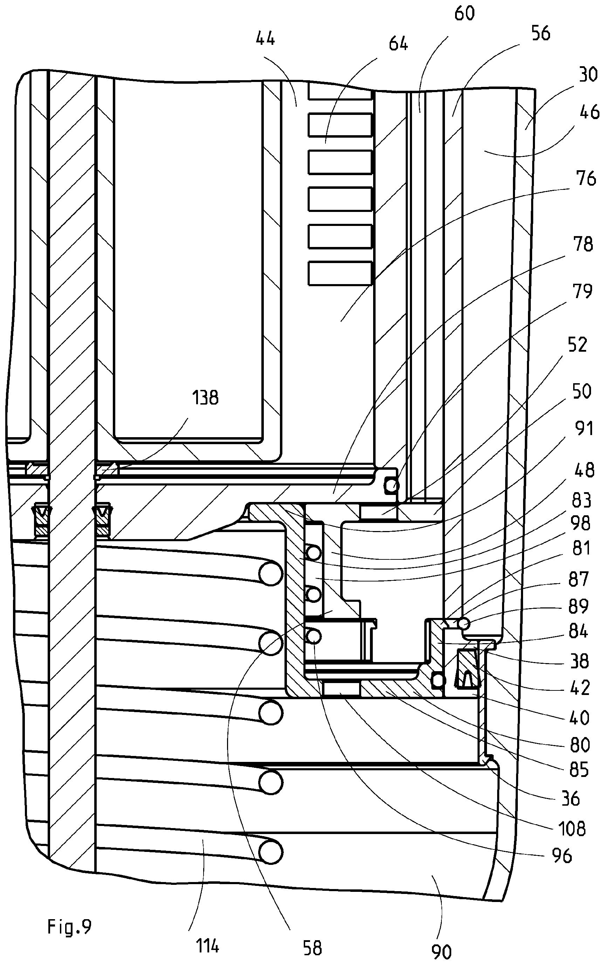

Das untere Ende 76 des Filterelements 44 ist rundum geschlossen. In diesem geschlossenen Ende 76 des Filterelements 44 ist von unten ein Bodenteil 78 mit einer außen umlaufenden Ringdichtung 79 eingesetzt (Fig.9). Das Bodenteil 78 schließt das Filterelement 44 nach unten ab. Das Bodenteil 78 wird von einem Klipsring 80 in seiner Lage gehalten. Dieser ist in Figur 9 gut zu erkennen. Der Klipsring 80 hat einen in axialer Richtung verlaufenden, ringförmigen, Schenkel 83 und mehrere Klipse 84, die in Umfangsrichtung verteilt sind. Schenkel 83 und Klipse 84 sind mit einem horizontalen Ring 85 verbunden. Die Klipse 84 sind in axialer Richtung kürzer als der innere Schenkel 83. Die Klipse 84 weisen am oberen Ende Haken 81 auf. Die Strebe 56 erstreckt sich nach unten über den Boden 78 hinaus. Am unteren Ende weist die Strebe 56 eine Bohrung 87 auf, die zur Wandung der Filtertasse 30 hin mit einer Dichtung 89 verschlossen ist. Der Haken 81 wird in die Bohrung 87 eingeklipst, wenn der Klipsring 80 von unten in das Filterelement 44 eingesteckt wird. Weitere, entsprechende Klipse sind im Bereich der anderen Streben vorgesehen. Entsprechend ist der Klipsring 80 rundum eingeklipst. Der weiter nach oben ragende, innere Schenkel 83 ist am oberen Ende mit einem radial nach innen ragenden, umlaufenden Rand 91 versehen. Auf dem Rand 91 liegt der Boden 78 auf. Der Boden 78 wird also ohne Verwendung eines Gewindes in seiner Lage gehalten.

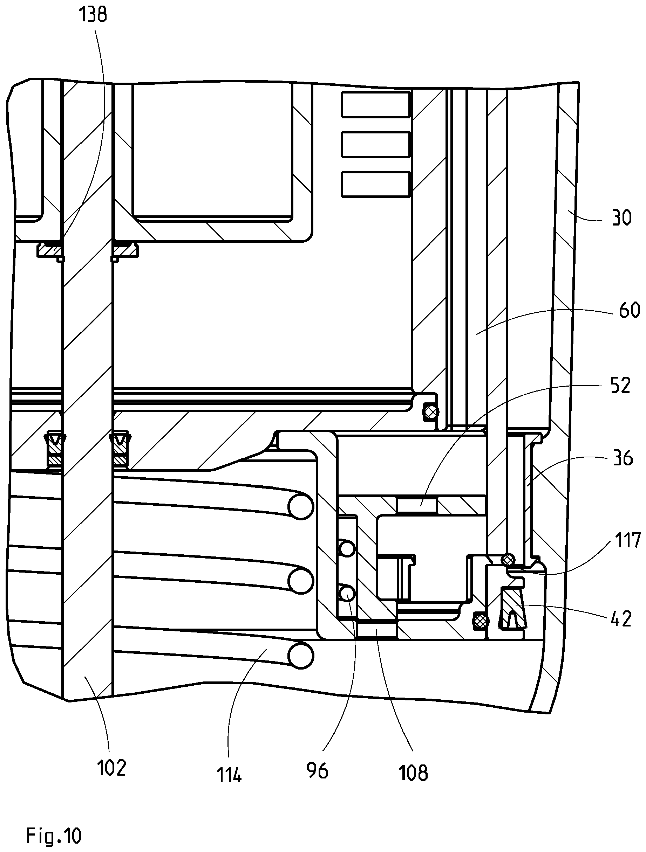

Im unteren Bereich bildet die Filtertasse 30 einen nach innen ragenden, umlaufenden flachen Rand 34. Um den Rand 34 greift ein dünner Ring 36. Am unteren Ende der nach unten hin längeren Streben 56 sind zwei nach außen ragende Vorsprünge 38 und 40 angeformt. Die Vorsprünge 38 und 40 bilden eine Aussparung. In der Aussparung sitzt eine Dichtung 42. Mit der Dichtung 42 ist das Filterelement 44 im unteren Bereich entlang des Rings 36 verschieblich geführt. Figur 1 zeigt das Filterelement 44 in einer oberen Position (Betriebsstellung), bei der die Dichtung 42 im oberen Bereich des Rings 36 anliegt. Figur 3 zeigt das Filterelement 44 in einer unteren Position (Rückspülstellung), bei der die Dichtung 42 über den unteren Bereich des Rings 36 hinaus geschoben wird. Dadurch wird ein Ringspalt 117 gebildet, der eine Verbindung zwischen dem Bereich oberhalb des Rings 36 und unterhalb des Rings 36 herstellt. Der Ringspalt 117 ist in Figur 10 gut zu erkennen. Zwischen der Innenwandung der Filtertasse 30 und dem Filterelement 44 ist ein Ringraum 46 gebildet. Der Ringraum 46 ist in der in Figur 1 gezeigten Betriebsstellung durch die Dichtung 42 nach unten verschlossen und in der in Figur 3 und 10 gezeigten Rückspülstellung nach unten offen.

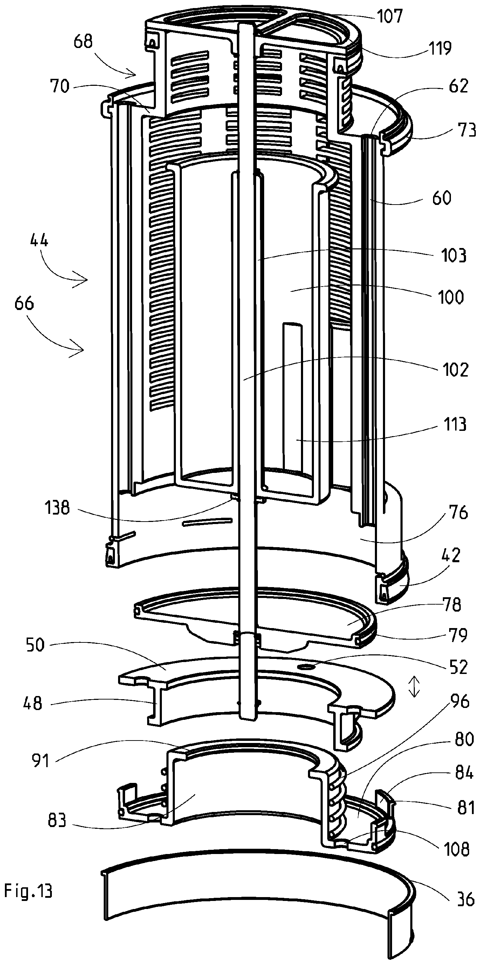

Zwischen Boden 78 und Klipsring 80 ist ein axialbeweglicher Steuerring 48 mit einem verbreiterten, unteren Ende 58 angeordnet. Der Steuerring 48 weist einen zylindrischen Teil auf, der sich in axialer Richtung erstreckt und einen horizontalen Teil 50. Im horizontalen Teil des Steuerrings 48 ist eine Bohrung 52 vorgesehen. Diese ist in Figur 13 gut zu erkennen.

Der horizontale Ring 85 des Klipsrings 80 bildet einen weiteren, zum Boden 78 beabstandeten Zwischenboden. Der Zwischenboden 85 trennt zusammen mit dem Boden 78 den Bodenraum 90 vom übrigen Innenraum der Filtertasse 30. Dies ist in Figur 1 zu erkennen. Im Zwischenboden 85 sind Bohrungen 108 vorgesehen. Die Bohrungen 108 verbinden den Bodenraum 90 mit dem Bereich zwischen dem Zwischenboden 85 und dem Boden 78. In der Betriebsstellung in Figur 1, 5, 8 und 9 ist die Bohrung 108 frei. In der Rückspülstellung in Figur 3 ist der bewegliche Steuerring 48 in einer unteren Position. Dann wird die Bohrung 108 verschlossen.

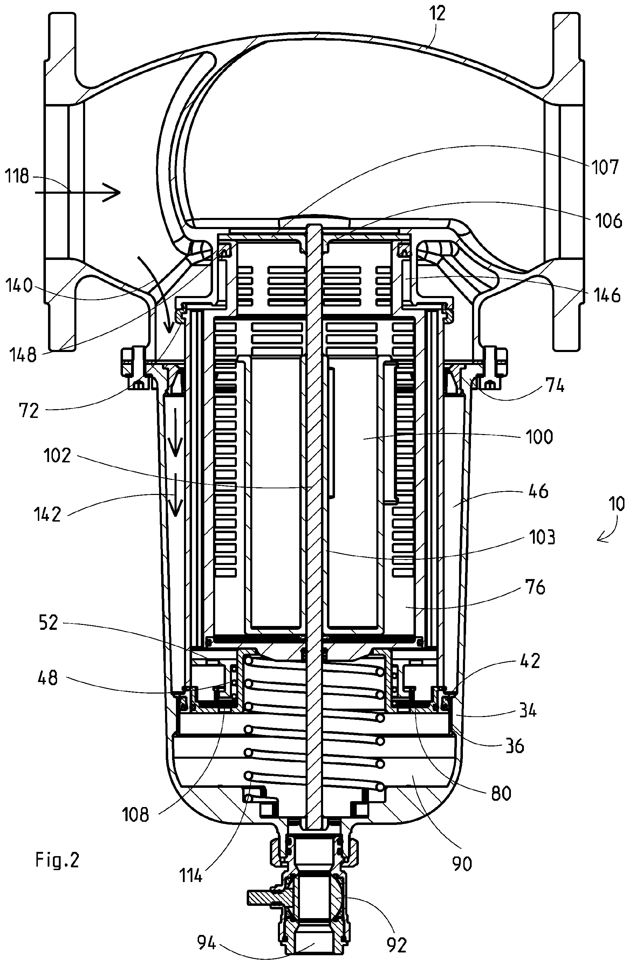

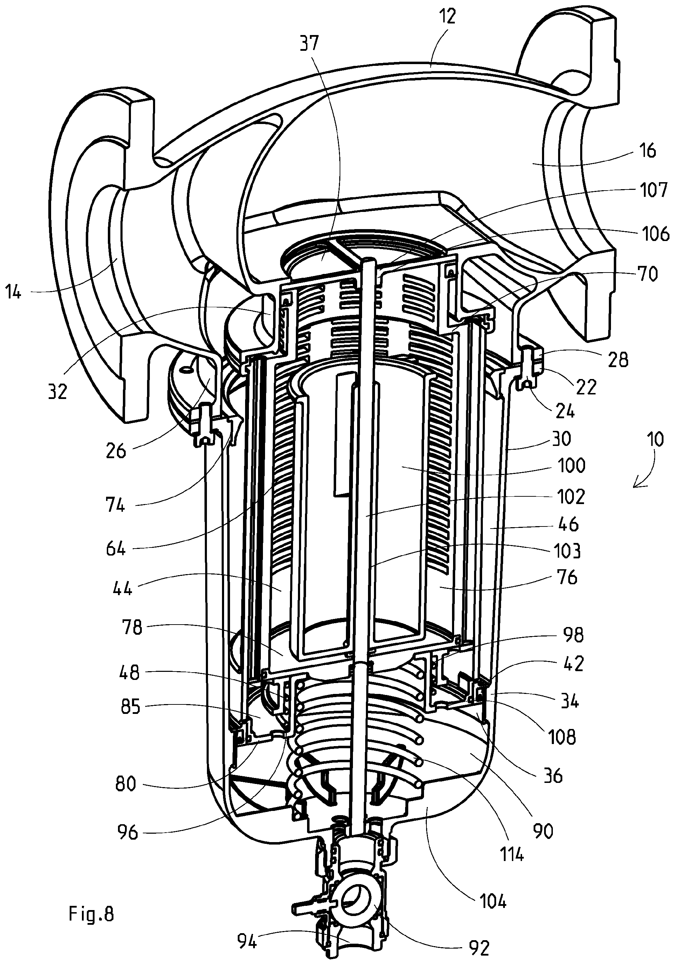

Am unteren Ende des Bodenraums 90 weist die Filtertasse 30 einen mit einem Kugelhahn 92 verschließbaren Ablauf 94 auf. Figur 1 und 8 zeigen die Situation mit vollständig geschlossenem Kugelhahn 92. Das ist die Betriebsstellung. In Figur 2 und 3 ist der Kugelhahn 92 geöffnet. Das ist die Zwischen- bzw. Rückspülstellung.

Auf dem Zwischenboden 85 sitzt eine schwache Feder 96. Die Feder 96 stützt sich auf der Oberseite des Zwischenbodens 85 ab. Der innere Schenkel 83 und der Ring 48 sind koaxial angeordnet. Dazwischen ist ein Ringraum 98 gebildet. Die Feder 96 sitzt in dem Ringraum 98. Die Feder 96 drückt von unten auf den horizontalen Teil 50 des Steuerrings 48.

Die Oberseite 50 des Steuerrings 48 liegt in radialer Richtung genau im Bereich der Kanäle 60. Wenn also der Steuerring 48 in der in Figur 1 dargestellten, oberen Position angeordnet ist, sind die Kanäle 60 nach unten mit seinem horizontalen Teil 50 verschlossen. Umgekehrt ist in dieser Stellung die Bohrung 52 vom Boden 78 verschlossen. Der Bereich zwischen dem Boden 78 und dem Zwischenboden 85 ist über die Bohrungen 108 mit dem Bereich 90 am Boden der Filtertasse verbunden. Eine Feder 114 im Bereich 90 ist am Boden der Filtertasse 30 abgestützt und drückt auf die Unterseite des Rands 91. Auf diese Weise wird die gesamte Baugruppe aus Bodenteil 78, Klipsring 80 und Filterelement 44 nach oben gedrückt bis der Rand 72 am oberen Ende des Filterelements 44 auf einen vom unteren Rand des inneren Stutzens 32 gebildeten Anschlag trifft. Diese Situation ist in Figur 1 dargestellt. Die Feder 114 ist stärker als die Feder 96. Entsprechend wird bei einer nach unten wirkenden Kraft zunächst der Steuerring 48 nach unten bewegt und dann erst die Baugruppe mit dem Filterelement 44.

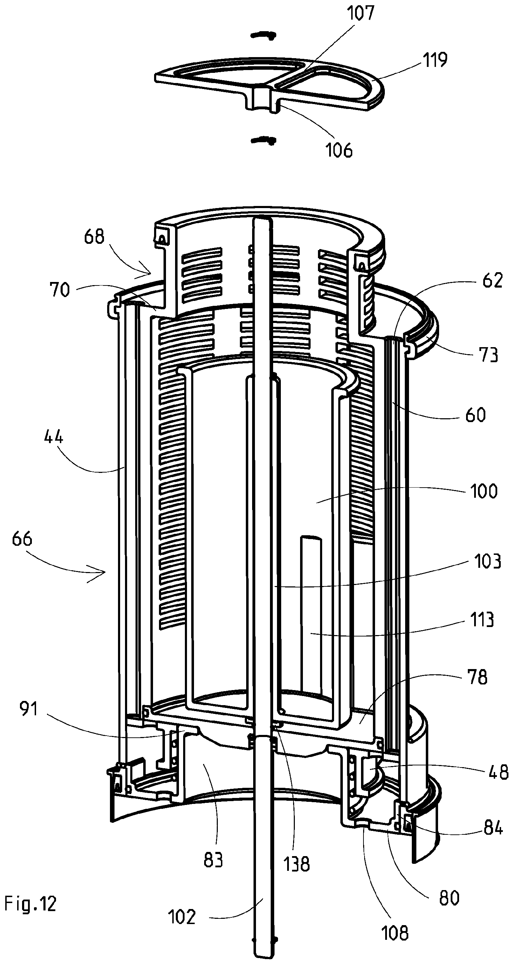

Entlang der Mittenachse der Filtertasse 30 und des dazu koaxialen Filterelements 44 ist ein Stab 102 angeordnet. Der Boden 78 des Filterelements 44 und der Boden 104 der Filtertasse 30 weisen je eine mit einer Dichtung versehene Mittenöffnung auf, die als Führung des Stabs 102 dienen. Das obere Ende des Stabs ist in einer zylindrischen Führung 106 geführt, die mit Rippen 107 in einem Ring 119 gehalten ist. Der Ring 119 ist in Figur 12 gut zu erkennen. Der Ring 119 ist am oberen Ende des Filterelements 44 angeordnet. Die Rippen 107 sind in Figur 4 und Figur 8 gut zu erkennen.

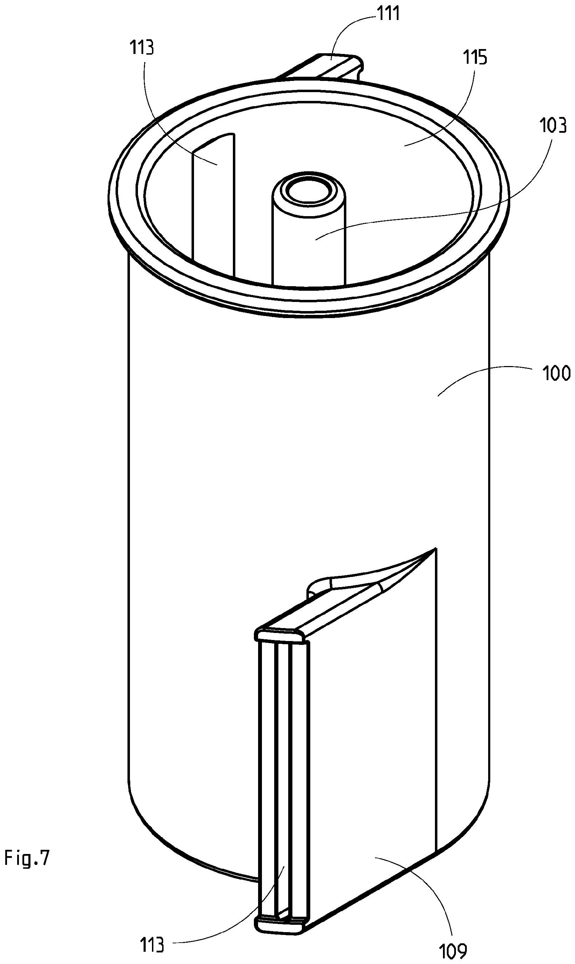

Ein Impeller 100 ist drehbar um den Stab 102 gelagert. In axialer Richtung ist der Impeller 100 unbeweglich. Hierzu ist ein Fixierring 138 am Stab 102 befestigt, der keine Bewegung des Impellers in axialer Richtung erlaubt. Der Impeller 100 ist im Wesentlichen topfförmig, nach unten geschlossen und nach oben offen. Im Mittenbereich ist ein rohrförmiges Lager 103 angeformt, welches um den Stab 102 dreht. Der Impeller ist in Figur 7 noch einmal separat in perspektivischer Darstellung gezeigt. Der Impeller 100 weist zwei Flachdüsen 109 und 111 auf. Diese sind in Figur 6 und 7 zu erkennen. Die Flachdüse 109 ist im unteren Bereich des Impellers 100 angeordnet. Die Flachdüse 111 ist im oberen Bereich des Impellers 100 angeordnet. Beide Flachdüsen 109 und 111 sind hohl und tangential an den kreisförmigen Querschnitt des topfförmigen Teils des Impellers 100 angeformt.

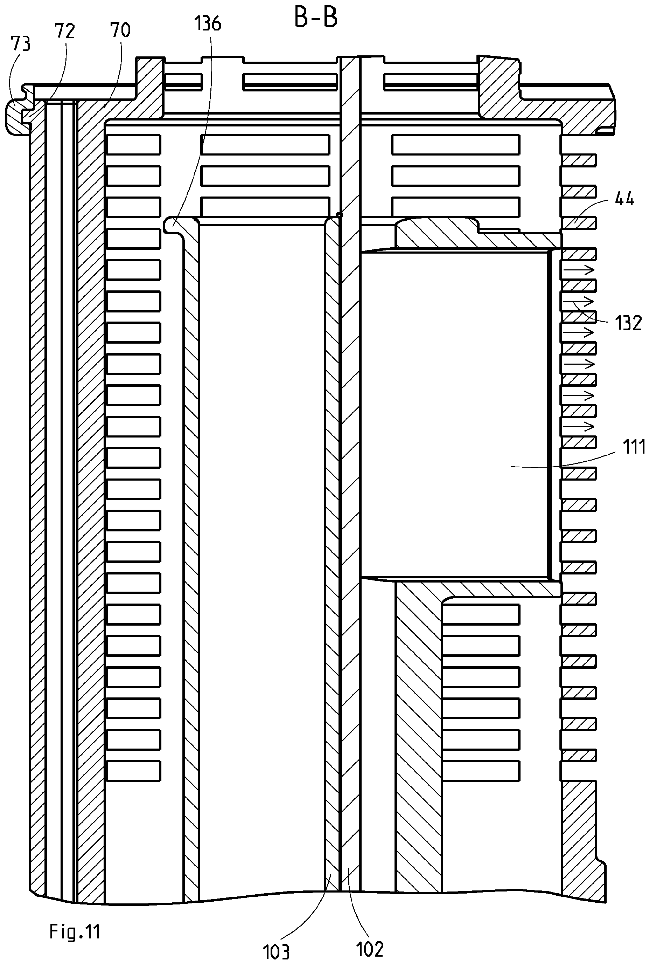

Der schlitzförmige Hohlraum 113 in den Flachdüsen 109 und 111 verbindet den Innenraum 115 des Impellers mit dem Außenraum. In Figur 6 und 11 ist zu erkennen, dass Wasser, das vom Innenraum nach außen strömt unter einem Winkel auf den Filterbereich des Filterelements 44 trifft. Bei einer Strömung wird der Impeller 100 entsprechend in Rotation versetzt.

Anhand von Figur 1 wird im folgenden erläutert, wie das Wasser in der in den Figuren 1 und 8 gezeigten Betriebsstellung durch die Armatur fließt:
Vom Einlass 14 gelangt das Wasser in das Gehäuse 12. Die dort gebildete Einlasskammer ist mit dem Innenraum der Filtertasse 30 verbunden. Im Innenraum der Filtertasse 30 sitzt das Filterelement 44. Zwischen Filtertasse 30 und Filterelement 44 ist der äußere Ringraum 46 gebildet. Das Wasser fließt also zunächst am Ringvorsprung 72 mit der Dichtung 73 vorbei in den Ringraum 46 in Richtung der Pfeile 118 und 120. Es kann nicht von außen durch den oberen Filterabschnitt 68, weil in der in Figur 1 gezeigten Betriebsstellung die Verbindung im Bereich des Ringvorsprungs 72 unterbrochen ist. Der Ringvorsprung 72 bildet somit zusammen mit dem unteren Rand des Stutzens 32 ein Ventil. Im unteren Bereich ist der Ringraum 46 durch den Ringvorsprung 34 und die Dichtung 42 verschlossen.

Vom Ringraum 46 fließt das Wasser zwischen den Streben 54 und 56 hindurch von außen nach innen durch den unteren Filterabschnitt 66 des Filterelements 44. Dies ist durch Pfeile 122 repräsentiert. Schmutzpartikel bleiben im unteren Filterabschnitt 66 außen am Filterelement 44 hängen. Das gefilterte Wasser fließt im Innenraum vom unteren Filterabschnitt 66 durch den oberen Filterabschnitt 68 nach oben. Von dort fließt das Wasser zum Auslass 16. Dort steht es zur weiteren Verwendung zur Verfügung.

In der in Figur 1 und 8 dargestellten Betriebsstellung drückt die Feder 114 die gesamte Gruppe mit dem Filterelement 44 nach oben. Es kann kein Wasser an der Dichtung 42 vorbei in den Bereich 90 am Boden der Filtertasse oder in den Bereich unterhalb des Bodens 78 fließen. Die Feder 96 drückt den Steuerring 48 nach oben. Die Kanäle 60 sind vom horizontalen Teil 50 des Steuerrings 48 nach unten hin verschlossen, so dass kein Wasser durch die Kanäle 60 strömt.

Mit der Zeit setzt sich der Filter mit Schmutzpartikeln zu. Dann muss der Filter rückgespült werden. Zu diesem Zweck wird der Kugelhahn 92 geöffnet. Die Rückspülstellung ist in Figur 3 dargestellt.

Wenn der Kugelhahn 92 geöffnet wird, fließt Wasser nach unten ab. Dadurch entsteht ein Differenzdruck mit einer nach unten wirkenden Kraft auf die Baugruppe aus Bodenteil 78, Steuerring 48 und Filterelement 44 entgegen der Federkraft der Federn 96 und 114. Die Baugruppe wird vollständig nach unten gezogen bis der Ringvorsprung 72 am oberen Ende des Filterelements 44 auf die Schulter 74 auf der Innenwandung der Filtertasse 30 anschlägt. In dieser Rückspülstellung wird die Strömung in den äußeren Ringraum 46 durch den Ringvorsprung 72 blockiert. Dies ist in Figur 3 gut zu erkennen. Stattdessen fließt Wasser zwischen in Richtung des Pfeils 128 zum oberen Filterabschnitt 68. Das Wasser strömt von außen nach innen durch den oberen Filterabschnitt 68 und anschließend nach unten in den Innenraum des in dem Filterelement 44 sitzenden Impellers 100. Dies ist durch einen Pfeil 130 repräsentiert. Der Impeller hat am oberen Ende einen Rand 136. In der Rückspülstellung sitzt die Schulter 70 auf der Höhe des Randes 136, so dass das Wasser nur in den Impeller 100 hinein und nicht am Impeller 100 vorbei fließen kann. Wasser fließt weiter in Richtung der Pfeile 132 durch die Flachdüsen 109 und 111 in den Ringraum 46. Figur 11 zeigt im Detail, wie die Flachdüse 111 bis dicht an das Filterelement 44 ragt. Der geringe Strömungsquerschnitt in den Flachdüsen 109 und 111 bewirkt eine hohe Strömungsgeschwindigkeit durch das Filterelement 44 von innen nach außen. Dabei werden außen haftende Schmutzpartikel, die in der Betriebsstellung im Filterelement 44 außen haften geblieben sind gelöst. Die Flachdüsen 109 und 111 werden durch die Drehung über den gesamten Winkelbereich entlang des Filterelements 44 bewegt. Dabei deckt die obere Flachdüse 111 den oberen und die untere Flachdüse 109 den unteren Bereich des Filterelements 44 ab. Das Wasser fließt zusammen mit den gelösten Schmutzpartikeln im Ringraum 46 nach unten. Dies ist durch Pfeile 134 repräsentiert.

Anders als in der Betriebsstellung ist der Ringraum 46 nun nach unten offen. Die Dichtung 42 ist in einer unteren Stellung unterhalb des Rings 36 und blockiert die Strömung nicht. Das Wasser fließt durch den Ringspalt 117 in den Bodenraum 90. Von dort gelangt es zusammen mit den Schmutzpartikeln durch den Ablauf 94 nach außen.

Um zu erreichen, dass die Baugruppe mit dem Filterelement 44 zum Rückspülen den vollen Differenzdruck und damit die größtmögliche Kraft entgegen der Kraft der Feder 114 erfährt, ist der Steuerring 48 am unteren Ende mit einem Rand 58 versehen, mit dem die Bohrung 108 in der Rückspülstellung verschlossen ist. Das Wasser kann also nur außen durch den Ringspalt 117 vorbeifließen.

Der innere Teil des Filterelements ist nach unten vollständig geschlossen. Entsprechend fließt das gesamte Wasser in umgekehrter Richtung von innen nach außen durch den unteren Filterabschnitt 66 in den äußeren Ringraum. Der Filter wird auf diese Weise rückgespült.

Durch den oberen Filterabschnitt 68 wird das Rückspülwasser ebenfalls gefiltert. Es können keine Schmutzpartikel in den Innenraum des Filterelements 44 gelangen. Mit der Zeit setzt sich aber auch dieser Filterabschnitt 68 zu. Es ist daher vorgesehen, dass der obere Filterabschnitt ebenfalls gereinigt wird. Dies wird durch eine Zwischenstellung erreicht, die in Figur 2 dargestellt ist.

Die Zwischenstellung wird erreicht, wenn der Kugelhahn 92 nur leicht geöffnet wird. Dabei fließt nur wenig Wasser nach unten ab und es wird nur ein geringer Differenzdruck erzeugt. Die Federkraft der Federn 114 und 96 ist gerade so gewählt, dass der geringe Differenzdruck ausreicht um den Steuerring 48 nach unten zu bewegen, aber nicht so groß ist, dass sich auch die Baugruppe aus Bodenteil 78, Steuerring 48 und Filterelement 44 vollständig nach unten bewegt. Diese Baugruppe nimmt vielmehr eine Zwischenposition ein. In dieser Zwischenposition sind die sowohl die Öffnungen 108 als auch die Öffnungen 52 offen. Auch die Kanäle 60 sind nach unten geöffnet.

Das Wasser fließt in Richtung der Pfeile 140 und 142 zunächst am Ringvorsprung 72 mit der Dichtung 73 vorbei in den äußeren Ringraum 46. Vom äußeren Ringraum durch den unteren Filterabschnitt 66 in den das Innere des Filterelements 44. Dabei bleiben Schmutzpartikel außen am Filterelement 44 hängen. Im Inneren des Filterelements 44 fließt das Wasser außen am Impeller 100 vorbei nach oben und durch den oberen Filterabschnitt 68 von innen nach außen. Dabei werden Schmutzpartikel am oberen Filterabschnitt 68 abgelöst, die sich außen auf dem oberen Filterabschnitt 68 während des Rückspülens abgesetzt haben. Mit anderen Worten: der beim Rückspülen wirksame obere Filterabschnitt 68 wird in der Zwischenstellung ebenfalls rückgespült und so gereinigt. Da die Zwischenstellung immer zumindest kurzzeitig eingenommen wird, wenn eine Rückspülung vorgenommen wird, wird auch der obere Filterabschnitt 68 regelmäßig gereinigt.

Das Rückspülwasser, das durch den oberen Filterabschnitt 68 geströmt ist, gelangt in den Bereich 146 oberhalb der Schulter 70. Dieser Bereich 146 ist nur über Bohrungen 62 mit den Kanälen 60 verbunden. Nach oben ist eine Dichtung 148 außen am oberen Filterabschnitt 68 vorgesehen, so dass das Rückspülwasser nicht zum Auslass fließen kann. Auf diese Weise gelangt das Rückspülwasser durch die Bohrung 62 in die Kanäle 60. Die Kanäle sind in der Zwischenstellung, wie in Figur 2 dargestellt, unten offen. Das Wasser fließt also zu den Bohrungen 52 und 108. Durch die in diesem Zustand offenen Bohrungen 52 und 108 fließt das Wasser durch den Bodenbereich 90 der Filtertasse 30 zum Ablauf 92.

Die Abfolge bei einer Rückspülung ist also: aus der in Figur 1 gezeigten Betriebsstellung wird bei Öffnen des Kugelhahns 92 zunächst der Steuerring 48 nach unten bewegt. Dabei öffnen die Kanäle 60 und der obere Filterabschnitt wird rückgespült. Bei weiterem Öffnen des Kugelhahns wird die Öffnung 108 verschlossen und der untere Filterabschnitt 66 rückgespült. Während des Rückspülens ist die Verbindung zwischen Einlass und Auslass nicht unterbrochen. Es kann also weiterhin Wasser gezapft werden.

Dadurch, dass die Öffnung 108 bei Erreichen der Rückspülstellung verschlossen wird, wird gleichzeitig erreicht, dass der volle Differenzdruck für die Bewegung der Baugruppe mit dem Filterelement 44 und für die Rückspülung zur Verfügung steht. Der Steuerring 48 wirkt folglich wie ein Doppelventil zum Verschließen und Öffnen der Kanäle 60 bzw. der Öffnung 52 und der Öffnung 108 nach unten.

### 2. Ausführungsbeispiel

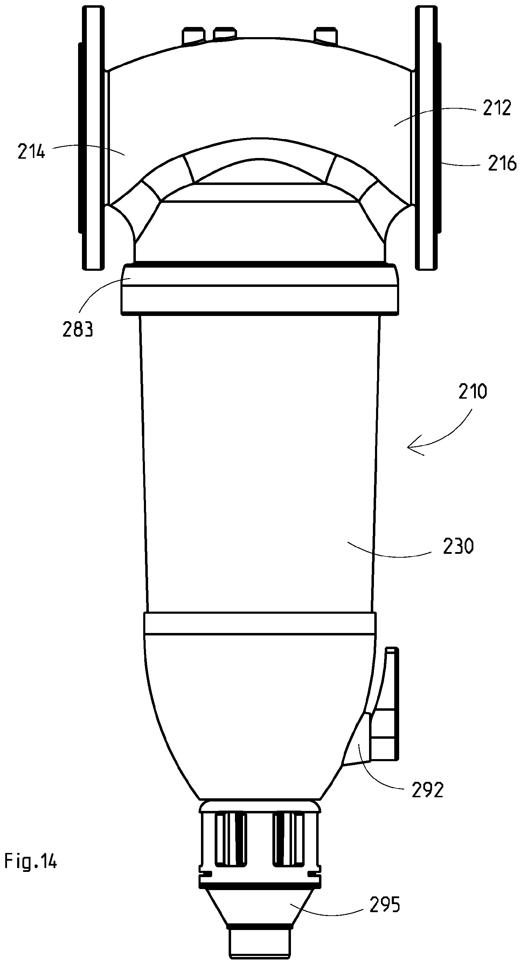

Das erste Ausführungsbeispiel verwendet einen Zwischenboden 85 mit einem federbeaufschlagten Hubteil. Das nachstehend beschriebene zweite Ausführungsbeispiel, welches anhand der Figuren 14 bis 21 beschrieben wird, ist anders aufgebaut und benötigt weder einen Zwischenboden, noch eine weitere Feder. Die Filteranordnung ist daher besonders robust und wenig anfällig gegenüber Dreckpartikeln.

Die Figuren 14 bis 21 zeigen eine Filteranordnung analog zu der Filteranordnung 10, die allgemein mit 210 bezeichnet ist, dem gleichen Zweck dient und bis auf die nachstehend beschriebenen Unterschiede identisch ist. Die Anordnung 210 weist eine Anschlussarmatur mit Gehäuse 212 auf. Das Gehäuse 212 hat einen Einlass 214 und einen Auslass 216. An dem Gehäuse 212 ist eine Filtertasse 230 angeschraubt.

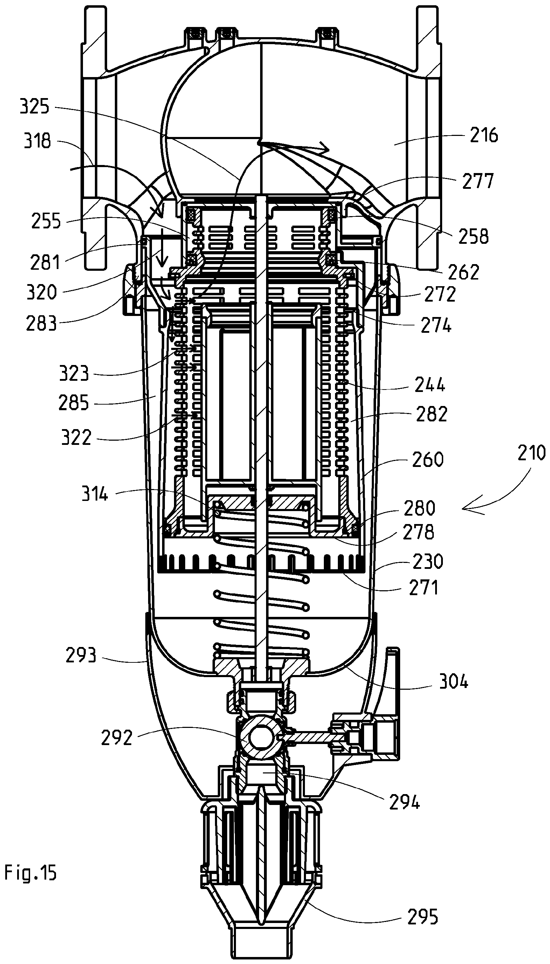

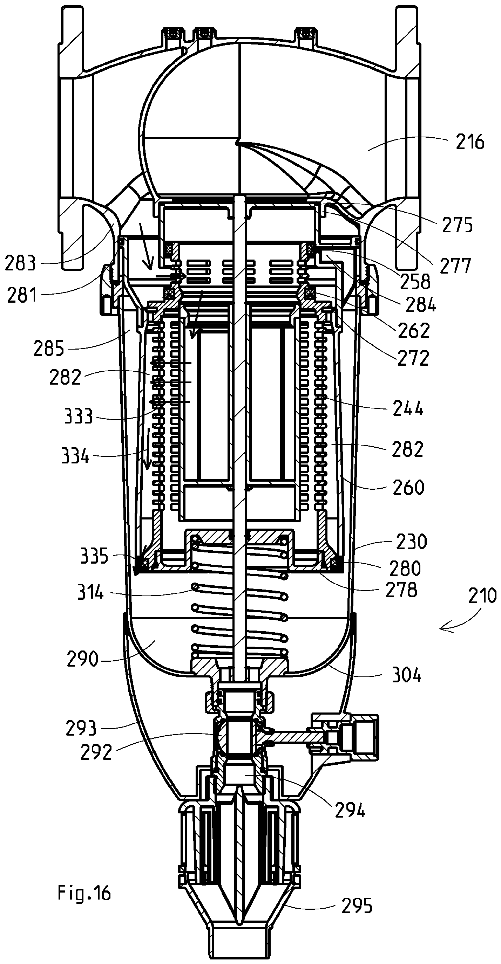

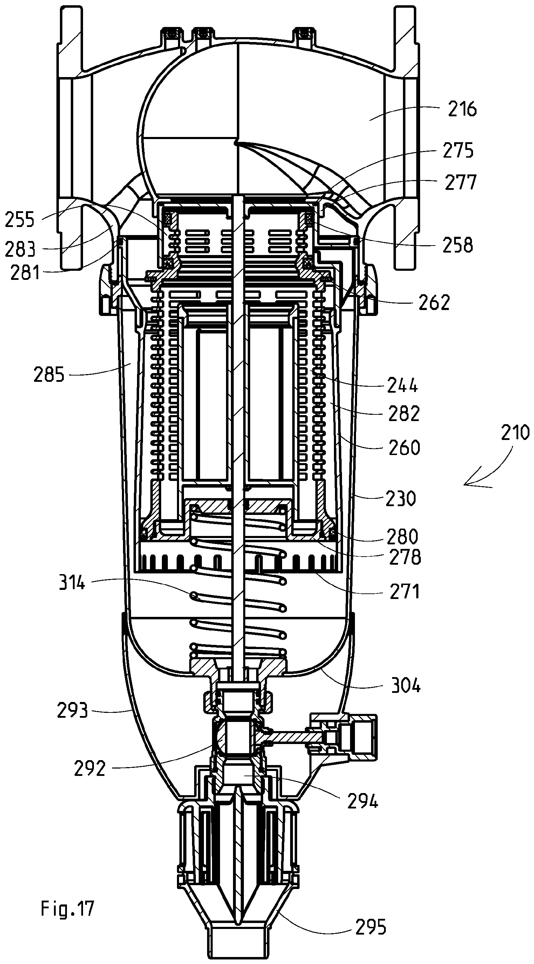

Am unteren Ende weist die Filtertasse 230 einen mit einem Kugelhahn 292 verschließbaren Ablauf 294 auf. Figur 15 zeigt die Situation mit vollständig geschlossenem Kugelhahn 292. Das ist die Betriebsstellung. In Figur 16 und 17 ist der Kugelhahn 292 geöffnet. Das ist die Zwischen- bzw. Rückspülstellung. Der Ablauf 294 und der Kugelhahn 292 sitzen in einer Abdeckkappe 293, welche am unteren Ende der Filtertasse 230 befestigt ist. Unterhalb der Abdeckkappe 293 mündet der Ablauf 294 in einem Ablauftrichter 295.

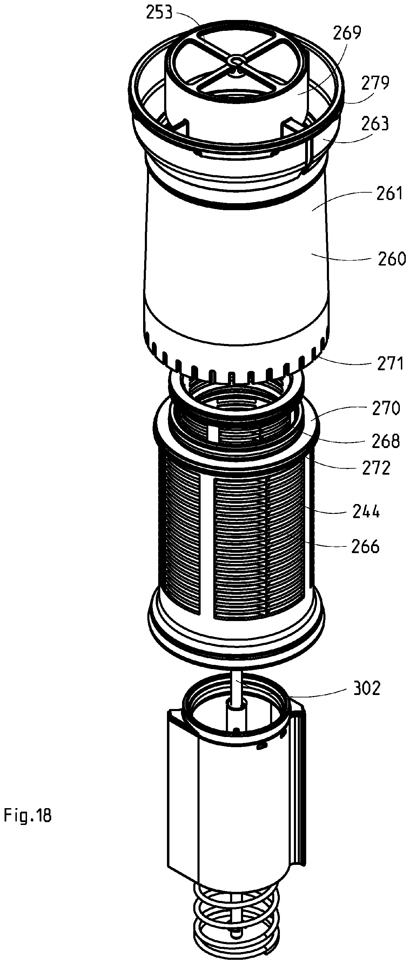

In die Filtertasse 230 ist ein im Wesentlichen zylindrisches Filterelement 244 axialbeweglich geführt. Figuren 18 bis 21 zeigen das Filterelement 244 im Detail. Das Filterelement 244 weist vertikale Streben 254 und 256 auf. Anders als im ersten Ausführungsbeispiel ist das Filterelement 244 aber nur mit Streben ohne Kanal versehen.

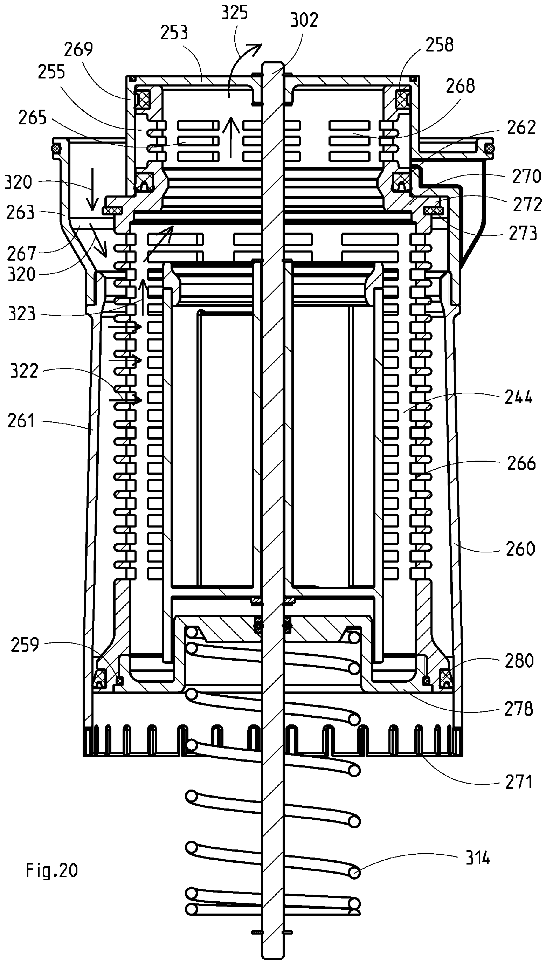

Wie das Filterelement 44 im ersten Ausführungsbeispiel weist das Filterelement 244 in axialer Richtung zwei Filterabschnitte auf: einen unteren, größeren Filterabschnitt 266 und einen oberen, kleineren Filterabschnitt 268. Der Filterabschnitt 268 ist nicht nur in axialer Richtung kürzer, sondern hat auch einen kleineren Durchmesser, als der untere Filterabschnitt 266. Knapp unter der so gebildeten Schulter 270 zwischen den Filterabschnitten 266 und 268 ist außen ein Ringvorsprung 272 angeformt. Um den Ringvorsprung 272 greift eine Dichtung 273. Dies ist in Figur 20 gut zu erkennen.

Oberhalb der Schulter 270, aber unterhalb des durchlässigen Bereichs 265 des oberen Filterabschnitts 268 ist eine Ringnut mit einer unteren Ringdichtung 262 vorgesehen. Am oberen Ende des oberen Filterabschnitts 268 oberhalb des durchlässigen Bereichs 265 ist eine Ringnut mit einer oberen Ringdichtung 258 vorgesehen.

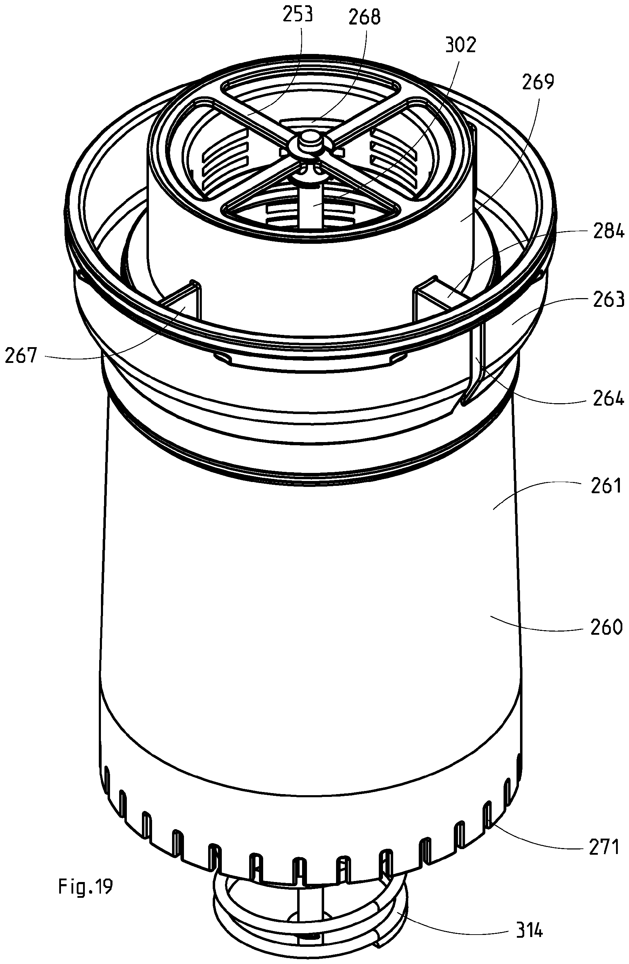

Das Filterelement 244 sitzt in einer zusätzlichen, koaxial angeordneten Hülse 260. Die Hülse ist in Figur 18 und 19 noch einmal gesondert dargestellt. Die Hülse 260 ist zweiteilig ausgebildet. Ein zylindrischer, unterer Hülsenrumpf 261 ist in einen Hülsenkopf 263 eingeschraubt. Der Hülsenkopf 263 ist mit radialen Stegen 267 versehen, die sich nach innen erstrecken. Die Stege 267 halten eine zylindrische Innenhülse 269. In der Innenhülse 269 sitzt der obere Filterabschnitt 268. Dies ist in Figur 20 gut zu erkennen. Der Hülsenrumpf 261 ist am unteren Rand mit nach unten offenen Schlitzen 271 versehen. Dies ist in Figur 19 zu erkennen.

Weitere Stege 253 erstrecken sich vom oberen Rand auf der Innenseite der Innenhülse 269 nach innen. Die Stege 253 sind im Mittenbereich der Innenhülse 269 verbunden. Ein bereits anhand des ersten Ausführungsbeispiels beschriebene Stab 302 ist in axialer Richtung unbeweglich mit der Filterhülse 260 verbunden, indem er durch den Mittenbereich der Innenhülse 269 geführt und dort mit Fixierringen fixiert ist. Anders als das Filterelement 244 ist also die Filterhülse 260 in axialer Richtung unbeweglich und gehäusefest in der Filtertasse 260 angeordnet.

Um den durchlässigen Bereich 265 des oberen Filterabschnitts 268 ist in der Betriebsstellung in Figur 15 und Figur 20 ein Ringraum 255 zwischen dem Filterelement 244 und der Innenwandung der Innenhülse 269 gebildet.

Die Oberseite der Innenhülse 269 bildet einen Rand mit einer Dichtung 275. Mit dem Rand liegt die Innenhülse 269 an einem innenliegenden Rand 277 des Auslasses 216 an. Ein innerer Stutzen am Gehäuse 212 wie beim ersten Ausführungsbeispiel ist nicht erforderlich. Der Innenraum der Innenhülse 269 mündet im Auslass 216. Der obere Rand 279 des Hülsenkopfes 263 ist außen mit einer Umfangsnut versehen. In der Umfangsnut ist eine Ringdichtung 281 angeordnet. Die Filtertasse 230 ist in einen Gehäusestutzen 283 des Gehäuses 212 eingesteckt. Die Ringdichtung 281 liegt an der Innenseite des Gehäusestutzens 283 an. Dabei wird ein Ringraum 285 zwischen der Hülse 260 und der Innenwandung der Filtertasse 230 gebildet. Der Einlass 214 mündet im Inneren der Hülse 260.

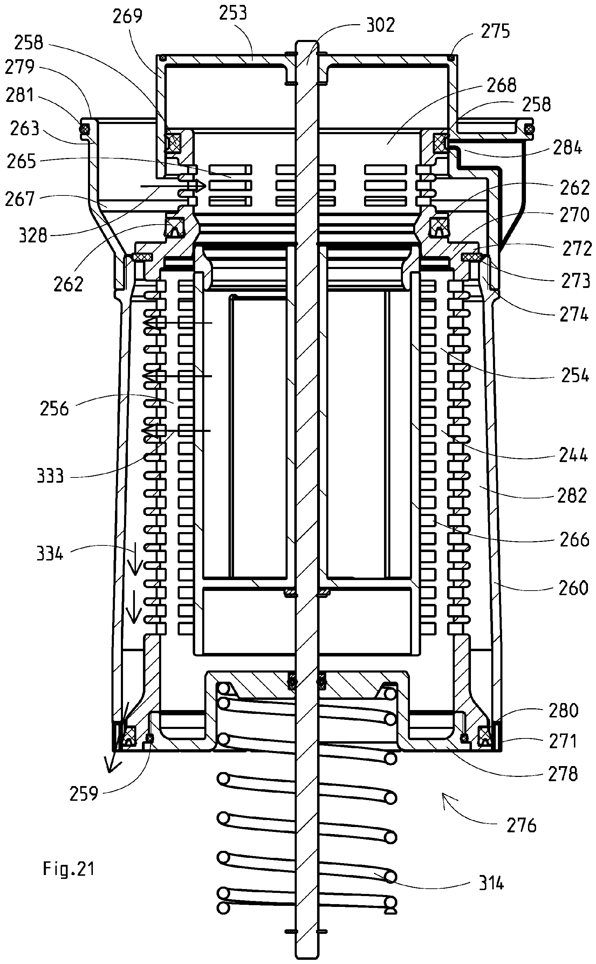

Der Hülsenrumpf 261 ist in den Hülsenkopf 261 eingeschraubt. An dieser Stelle bildet die Hülse 260 eine Schulter 274. Die Schulter 274 bildet einen Anschlag. Die Bewegung des Filterelements 244 nach unten wird durch die Schulter 274 begrenzt, wenn dort der Ringvorsprung 272 mit der Dichtung 273 auftrifft. Diese Situation ist in Figur 16 und Figur 21 dargestellt. Dann ist die Verbindung zwischen Einlass 214 und dem Inneren der Hülse 260 an dieser Stelle unterbrochen. In der Zwischenstellung, die in Figur 17 gezeigt ist, ist diese Verbindung noch geöffnet.

Der Hülsenkopf 263 ist mit einem seitlichen Schlitz 264 versehen. Im gleichen Winkelbereich weist die Innenhülse 269 ebenfalls einen Schlitz auf. Die Schlitze 264 sind über einen Kanal 284 miteinander verbunden. Der Schlitz 264 und der Kanal 284 sind in Figur 19 gut zu erkennen. Über den Kanal 284 ist der Innenraum der Innenhülse mit dem Ringraum 285 der Hülse 260 verbunden. In der Rückspülstellung, wenn Wasser in den Bereich 255 um den oberen Filterabschnitt 268 gelangt, ist der Schlitz 264 und der Kanal 284 von der oberen Ringdichtung 258 gerade verschlossen.

Das untere Ende 276 des Filterelements 244 ist rundum geschlossen. In diesem geschlossenen Ende 276 des Filterelements 244 ist von unten ein Bodenteil 278 mit einer außen umlaufenden Ringdichtung 259 eingeschraubt (Fig.20 und Fig. 21). Das Bodenteil 278 schließt das Filterelement 244 nach unten ab. Eine Feder 314 ist am Boden 304 der Filtertasse 230 abgestützt und drückt von unten auf das Bodenteil 278. Auf diese Weise wird das Filterelement 244 nach oben gedrückt. Das Filterelement 244 ist am unteren Rand etwas verbreitert. Im Bereich der Verbreiterung ist eine Ringnut auf der Außenseite des Filterelements 244 vorgesehen. In der Ringnut sitzt eine Ringdichtung 280. Die Dichtung 280 begrenzt einen Ringraum 282 außerhalb des unteren Filterabschnitts 266 nach unten.

Am unteren Ende des Bodenraums 290 weist die Filtertasse 230 einen mit einem Kugelhahn 292 verschließbaren Ablauf 294 auf. Figur 15 zeigt die Situation mit vollständig geschlossenem Kugelhahn 292. Das ist die Betriebsstellung. In Figur 16 und 17 ist der Kugelhahn 292 geöffnet. Das ist die Zwischen- bzw. Rückspülstellung.

Entlang der Mittenachse der Filtertasse 230 und des dazu koaxialen Filterelements 244 ist der Stab 302 angeordnet. Der Boden 278 des Filterelements 244 und der Boden 304 der Filtertasse 230 weisen je eine mit einer Dichtung versehene Mittenöffnung auf, die als Führung des Stabs 302 dienen. Das obere Ende des Stabs 302 ist mit Stegen in der Innenhülse 269 gehalten.

Ein Impeller 300 ist drehbar um den Stab 302 gelagert. Aufbau und Funktion es Impellers 300 entspricht der des Impellers 100 im ersten Ausführungsbeispiel und braucht daher hier nicht erneut beschrieben werden.

Anhand von Figur 15 wird im folgenden erläutert, wie das Wasser in der in den Figuren 15 und 20 gezeigten Betriebsstellung durch die Armatur fließt:
Vom Einlass 214 gelangt das Wasser in das Gehäuse 212. Die dort gebildete Einlasskammer ist mit dem Innenraum der Filterhülse 260 verbunden. Im Innenraum der Filterhülse 260 sitzt das Filterelement 244. Zwischen der Filterhülse 260 und Filterelement 244 ist der Ringraum 282 gebildet. Das Wasser fließt also zunächst am Ringvorsprung 272 mit der Dichtung 273 vorbei in den Ringraum 282 in Richtung der Pfeile 318 und 320. Es kann nicht an der Dichtung 281 vorbei in den Ringraum 285 zwischen Filterhülse 260 und Filtertasse 230 gelangen. Es kann auch nicht von außen durch den oberen Filterabschnitt 268, weil in der in Figur 15 gezeigten Betriebsstellung die Verbindung im Bereich des Ringvorsprungs 272 unterbrochen ist. Der Ringvorsprung 272 bildet somit zusammen mit dem unteren Rand der Innenhülse 269 und der unteren Ringdichtung 262 ein Ventil. Im unteren Bereich ist der Ringraum 282 durch die Ringdichtung 280 verschlossen. Der Kanal 284 ist zwar offen, aber da der Kugelhahn 292 geschlossen ist, kann das Wasser hier nicht strömen.

Vom Ringraum 282 fließt das Wasser zwischen den Streben 54 und 56 hindurch von außen nach innen durch den unteren Filterabschnitt 266 des Filterelements 244. Dies ist durch Pfeile 322 repräsentiert. Schmutzpartikel bleiben im unteren Filterabschnitt 266 außen am Filterelement 244 hängen. Das gefilterte Wasser fließt im Innenraum vom unteren Filterabschnitt 266 durch den oberen Filterabschnitt 268 nach oben. Von dort fließt das Wasser zum Auslass 216. Dort steht es zur weiteren Verwendung zur Verfügung. Dies ist durch Pfeile 323 und 325 repräsentiert.

In der in Figur 15 und 20 dargestellten Betriebsstellung drückt die Feder 314 die gesamte Gruppe mit dem Filterelement 244 nach oben. Es kann kein ungefiltertes Wasser entweder an der Dichtung 281 oder an der Dichtung 280 vorbei in den Bereich 290 am Boden der Filtertasse fließen.

Mit der Zeit setzt sich der Filter mit Schmutzpartikeln zu. Dann muss der Filter rückgespült werden. Zu diesem Zweck wird der Kugelhahn 292 geöffnet. Die Rückspülstellung ist in Figur 16 und Figur 21 dargestellt.

Wenn der Kugelhahn 292 geöffnet wird, fließt Wasser nach unten ab. Dadurch entsteht ein Differenzdruck mit einer nach unten wirkenden Kraft auf die Baugruppe aus Bodenteil 278 und Filterelement 244 entgegen der Federkraft der Feder 314. Die Baugruppe wird vollständig nach unten gezogen bis der Ringvorsprung 272 am Filterelement 244 auf der Schulter 274 anschlägt. In dieser Rückspülstellung wird die Strömung in den Ringraum 282 zwischen Filterelement 244 und Filterhülse 260 durch den Ringvorsprung 272 blockiert. Der Kanal 284 wird durch die Obere Ringdichtung 258 verschlossen. Dies ist in Figur 21 gut zu erkennen. Stattdessen fließt Wasser zwischen in Richtung des Pfeils 328 zum oberen Filterabschnitt 268. Die untere Ringdichtung 262 befindet sich in einem Abstand zur unteren Kante der Innenhülse 269. Entsprechend kann das Wasser nun von außen nach innen durch den oberen Filterabschnitt 268 und anschließend nach unten in den Innenraum des in dem Filterelement 244 sitzenden Impellers 300 strömen. Die Strömung durch den Impeller 300 ist identisch wie im ersten Ausführungsbeispiel. In der Rückspülstellung wird das Wasser vom Impeller 300 in umgekehrter Richtung von innen nach außen durch den unteren Filterabschnitt 266 geleitet. Dabei werden die Schmutzpartikel gelöst. Das Wasser fließt zusammen mit den gelösten Schmutzpartikeln im Ringraum 282 nach unten. Die Ringdichtung 280 am unteren Ende des Filterelements 244 befindet sich auf der Höhe der Schlitze 271. Die Schlitze 271 stellen eine Verbindung zwischen dem Ringraum 282 und dem Bodenbereich 290 der Filtertasse 230 her, durch welche das Wasser in der Rückspülstellung nach unten abfließen kann. Dies ist durch Pfeile 333, 334 und 335 repräsentiert.

Anders als in der Betriebsstellung ist der Ringraum 282 nun nach unten offen. Die Dichtung 280 blockiert die Strömung nicht. Das Wasser fließt durch die Spalte 271 in den Bodenraum 290. Von dort gelangt es zusammen mit den Schmutzpartikeln durch den Ablauf 294 nach außen. Die obere Ringdichtung 258 befindet sich in der Rückspülstellung gerade auf der Höhe des seitlichen Kanals 284. Dadurch wird sichergestellt, dass die gesamte Strömung nach unten in den Impeller 300 fließt und nicht seitlich über den Ringraum 285 nach unten abfließen kann.

Um zu erreichen, dass die Baugruppe mit dem Filterelement 244 zum Rückspülen den vollen Differenzdruck und damit die größtmögliche Kraft entgegen der Kraft der Feder 314 erfährt, ist vorgesehen, dass das Bodenteil 278 vollständig verschlossen ist. Das Wasser kann also nur außen durch die Schlitze 271 vorbeifließen.

Durch den oberen Filterabschnitt 268 wird das Rückspülwasser ebenfalls gefiltert. Es können keine Schmutzpartikel in den Innenraum des Filterelements 244 gelangen. Mit der Zeit setzt sich aber auch dieser Filterabschnitt 268 zu. Es ist daher vorgesehen, dass der obere Filterabschnitt ebenfalls gereinigt wird. Dies wird durch eine Zwischenstellung erreicht, die in Figur 17 dargestellt ist.

Die Zwischenstellung wird erreicht, wenn der Kugelhahn 292 geöffnet wird und das Filterelement 244 nach unten bewegt wird. In dieser Zwischenposition ist der Kanal 284 offen. Die obere Ringdichtung 258 sitzt weiter oberhalb.

In der Zwischenposition liegt hat Ringvorsprung 272 die Schulter 274 noch nicht erreicht. Das Wasser fließt ähnlich wie in der Betriebsstellung zunächst am Ringvorsprung 272 mit der Dichtung 273 vorbei in den Ringraum 282. Vom äußeren Ringraum durch den unteren Filterabschnitt 266 in den das Innere des Filterelements 244. Dabei bleiben Schmutzpartikel außen am Filterelement 244 hängen. Im Inneren des Filterelements 244 fließt das Wasser außen am Impeller 300 vorbei nach oben und durch den oberen Filterabschnitt 268 von innen nach außen. Dabei werden Schmutzpartikel am oberen Filterabschnitt 268 abgelöst, die sich außen auf dem oberen Filterabschnitt 268 während des Rückspülens abgesetzt haben. Mit anderen Worten: der beim Rückspülen wirksame obere Filterabschnitt 268 wird wie beim ersten Ausführungsbeispiel in der Zwischenstellung ebenfalls rückgespült und so gereinigt. Da die Zwischenstellung immer zumindest kurzzeitig eingenommen wird, wenn eine Rückspülung vorgenommen wird, wird auch der obere Filterabschnitt 268 regelmäßig gereinigt.

Das Rückspülwasser, das durch den oberen Filterabschnitt 268 geströmt ist, gelangt in den Bereich 255 oberhalb der Schulter 270. Dieser Bereich 255 ist nur über den Kanal 284 und den Ringraum 285 mit dem Bodenraum 290 verbunden. Nach oben ist die obere Ringdichtung 258 außen am oberen Filterabschnitt 268 vorgesehen, so dass das Rückspülwasser aus dem Bereich 255 nicht zum Auslass fließen kann. Auf diese Weise gelangt das Rückspülwasser aufgrund des Unterdrucks am Ablauf durch die den Kanal 284 und den Ringraum 285 zum Bodenbereich 290 der Filtertasse 230 zum geöffneten Ablauf 292.

Die Abfolge bei einer Rückspülung ist also ähnlich wie im ersten Ausführungsbeispiel: aus der in Figur 15 gezeigten Betriebsstellung wird bei Öffnen des Kugelhahns 292 zunächst der Kanal 284 von der unteren Ringdichtung 262 freigegeben und der obere Filterabschnitt 268 wird rückgespült. Bei weiterem Öffnen des Kugelhahns wird der Kanal 284 wieder verschlossen und der untere Filterabschnitt 266 rückgespült. Während des Rückspülens ist die Verbindung zwischen Einlass und Auslass nicht unterbrochen. Es kann also weiterhin Wasser gezapft werden.

Beide beschriebenen Anordnungen haben den Vorteil, dass der obere Filterabschnitt 68 bzw. 268, mit dem das Wasser vor der Verwendung für die Rückspülung des unteren Filterabschnitts 66 bzw. 266 gefiltert wird, ebenfalls rückgespült wird. Diese Rückspülung erfolgt jedes Mal, wenn der Kugelhahn für die Rückspülung des unteren Filterabschnitts 66 bzw. 266 geöffnet wird. Dadurch, dass die Öffnung 108 bzw. der Kanal 284 bei Erreichen der Rückspülstellung verschlossen wird, wird aber gleichzeitig erreicht, dass der volle Differenzdruck für die Bewegung der Baugruppe mit dem Filterelement 44 bzw. 244 und für die Rückspülung zur Verfügung steht.

Die Verwendung eines Impellers mit Flachdüsen hat den Vorteil eines verringerten Strömungsquerschnitts und einem entsprechend höherem Druck beim Rückspülen. Festsitzende Partikel können so besser gelöst werden. Die tangentiale Anordnung der Flachdüsen bewirkt eine Drehung ohne zusätzlichen Antrieb, so dass der gesamte Winkelbereich überstrichen wird.

Während hier eine Anordnung mit zwei versetzten Flachdüsen gezeigt ist, versteht es sich, dass auch eine Vielzahl von anderen Düsenformen, etwa runde Öffnungen oder dergleichen und eine Vielzahl von anderen Anordnungen mit mehr oder weniger Düsen geeignet ist. Die Verwendung von paarweise gegenüberliegenden Düsen hat den Vorteil, dass sich laterale Kräfte kompensieren.

Die beschriebenen Ausführungsbeispiele sind derart ausgestaltet, dass ein Wasserfluss vom Einlass zum Auslass auch während der Rückspülung möglich ist. Es versteht sich, dass bei einem alternativen Ausführungsbeispiel diese Verbindung unterbrochen werden kann, so dass der volle Druck auf den Ring 48 nach unten in Richtung Ablauf 94 wirkt.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Rückspülfilter zum Filtern von Trink- oder Brauchwasser, welcher von einer Betriebsstellung, bei welcher Wasser vom Einlass (14; 214) durch den Filter (44, 244) zum Auslass (16; 216) geleitet wird, zum Rückspülen in eine Rückspülstellung umschaltbar ist, bei welcher Wasser vom Einlass (14; 214) in umgekehrter Richtung durch den Filter (44, 244) zu einem geöffneten Ablauf (92; 292) leitbar ist, enthaltend:
(a) eine Anschlussarmatur (12; 212) mit einem Einlass (14; 214) und einem Auslass (16; 216);
(b) eine Filtertasse (30; 230) mit einem verschließbaren Ablauf (94; 294);
(c) ein zwischen einem oberen und einem unteren Anschlag axialbeweglich geführtes Filterelement (44; 244) mit einem oberen Filterabschnitt (68; 268) und einem unteren Filterabschnitt (66; 266) und einem um das Filterelement (44; 244) herum angeordneten, mit dem Einlass verbindbaren Ringraum (46; 282);
(d) Mittel zum Trennen des Ringraums (46; 282) derart, dass der untere Filterabschnitt (66; 266) in der Betriebsstellung und der obere Filterabschnitt (68; 268) in der Rückspülstellung mit dem Einlass (16; 216) verbindbar ist und von außen nach innen durchflossen wird; und
(e) einen um die Längsachse des Filterelements (44; 244) drehbaren Impeller (100; 300) innerhalb des Filterelements (44; 244), durch welchen in der Rückspülstellung Wasser von Innen nach Außen durch einen verringerten Winkelbereich des unteren Filterabschnitts (66; 266) leitbar ist;
**dadurch gekennzeichnet, dass**
(f) der obere Filterabschnitt (68; 268) einen kleineren Durchmesser hat als der untere Filterabschnitt (66; 266), so dass zwischen oberem und unterem Filterabschnitt eine Ringschulter (70; 270) gebildet ist, und
(g) der Impeller (100; 300) in axialer Richtung gehäusefest ist und einen zylindrischen, oben offenen Körper aufweist, dessen Durchmesser größer ist, als der Durchmesser des oberen Filterabschnitts (66; 266) und kleiner als der Durchmesser des unteren Filterabschnitts (68; 268).

2. Rückspülfilter nach Anspruch 1, **dadurch gekennzeichnet, dass** der Impeller (100; 300) eine oder mehrere Flachdüsen (109, 111) auf der Außenseite des zylindrischen Körpers aufweist, die mit dem Innenraum des Impellers in Verbindung stehen.

3. Rückspülfilter nach Anspruch 2, **dadurch gekennzeichnet, dass** die Flachdüsen (109, 111) derart am Impeller (100; 300) angeformt sind, dass ausströmendes Rückspülwasser schräg unter einem Winkel von Innen auf den unteren Filterabschnitt (66; 266) trifft, der ungleich 90° ist, vorzugsweise zwischen 5° und 75° und höchst vorzugsweise zwischen 30° und 50° bezogen auf die Tangente im Auftreffpunkt, so dass das Rückspülwasser den Impeller in Rotation versetzt.

4. Rückspülfilter nach Anspruch 2 oder 3, **dadurch gekennzeichnet, dass** mehrere, in axialer Richtung versetzte Flachdüsen (109, 111) vorgesehen sind, welche die Höhe des unteren Filterabschnitts (66; 266) abdecken.

5. Rückspülfilter nach Anspruch 4, **dadurch gekennzeichnet, dass** die Flachdüsen (109, 111) in Umfangsrichtung winkelversetzt sind, so dass sich die lateralen Kräfte auf den Impeller kompensieren.

6. Rückspülfilter nach einem der vorgehenden Ansprüche, **dadurch gekennzeichnet, dass** die Mittel zum Trennen des Ringraums (46; 282) einen Ringvorsprung (72; 272) außen auf dem Filterelement (44; 244) zwischen dem oberen Filterabschnitt (68; 268) und dem unteren Filterabschnitt (66; 266) umfassen, der mit einer Schulter (274) oder einem Ringvorsprung (74) auf der Innenwandung der Filtertasse (30; 230) oder einer das Filterelement (244) umgebenden Filterhülse (260) derart zusammenwirkt, dass
(i) die Verbindung vom Einlass zum Ringraum (46; 282) um den unteren Filterabschnitt (66; 266) in einer oberen Stellung des Filterelements (44; 244) geöffnet ist und in einer unteren Stellung des Filterelements (44; 244) blockiert ist; und
(ii) die Verbindung vom Einlass zum Bereich (146; 255) um den oberen Filterabschnitt (68; 268) in der oberen Stellung des Filterelements (44; 244) blockiert ist und der unteren Stellung des Filterelements (44; 244) geöffnet ist.

7. Rückspülfilter nach einem der vorgehenden Ansprüche, **gekennzeichnet, durch** einen Boden (78) zum Verschließen des Filterelements (44) am unteren Ende und eine Feder, welche das Filterelement (44) mit einer Federkraft nach oben beaufschlagt.

8. Rückspülfilter nach einem der vorgehenden Ansprüche, **gekennzeichnet durch** ein mit dem Filterelement (44; 244) axialbewegliches Ventilglied (80, 42; 280), welches die Verbindung zwischen dem Ringraum (46; 282) um den unteren Filterabschnitt (66; 266) und dem Ablauf (94; 294) kontrolliert, wobei die Verbindung in der Betriebsstellung geschlossen und in der Rückspülstellung geöffnet ist.

9. Rückspülfilter nach Anspruch 8, **gekennzeichnet durch** einen oder mehrere Kanäle (60, 62) zum Verbinden des Bereichs (146) außen um den oberen Filterabschnitt (68) mit dem Bereich unterhalb des unteren Filterabschnitts (66) und zwischen Boden (78) und Ventilglied (80) ein axialverschieblich geführtes, Federkraft-beaufschlagtes Hubelement (48), welches in einer oberen Endstellung die Kanäle (60) und in einer unteren Endstellung eine im Ventilglied (80) vorgesehene Öffnung (108) verschließt, wobei die auf das Filterelement (44) wirkende Federkraft größer ist, als die auf das Hubelement wirkende Federkraft.

10. Rückspülfilter nach einem der vorgehenden Ansprüche, **gekennzeichnet durch** einen äußeren Rand (277) oder Stutzen (26) und eine koaxiale innere Hülse (269) oder einen Stutzen (32), wobei der Innenbereich (37) der inneren Hülse oder des inneren Stutzens (32; 277) mit dem Auslass (16; 216) verbunden ist und der Innenbereich des äußeren Randes oder Stutzens (26) mit dem Einlass (14) verbunden ist, und die innere Hülse (269) oder der innere Stutzen (26) sich wenigstens bis zum koaxial dazu angeordneten Filterelement (44; 244) erstreckt.

11. Rückspülfilter nach einem der vorgehenden Ansprüche, **dadurch gekennzeichnet, dass** das Filterelement (44) mehrere vertikale Streben (54) aufweist und wenigstens ein Teil der Streben (54) zusätzlich mit einem Kanal (60) versehen sind, der über eine Bohrung (62) den Bereich (146) außerhalb des oberen Filterabschnitts (68) mit dem Bereich unterhalb des Bodens (78) verbindet.

12. Rückspülfilter nach einem der Ansprüche 1 bis 11, **dadurch gekennzeichnet, dass** das Filterelement (244) in einer gehäusefesten Filterhülse (260) beweglich geführt ist.

## Claims

1. Backflow filter for filtering drinking and water for other use which is adapted to be switched from an operating position where water is flowed from the inlet (14; 214) through the filter (44, 244) to the outlet (15; 216) to a backflow position for backflushing, where water is flowed from the inlet (14; 214) in reverse direction through the filter to an open drain (92; 292), comprising:
(a) a connection fitting (12; 212) with an inlet (14; 214) and an outlet (16; 216);
(b) a filter cup (30; 230) with a closable drain (94; 294);
(c) a filter element (44; 244) moveably guided in an axial direction between an upper filter section (68; 268) and a lower filter section (66; 266) and an annular space (46; 282) around the filter element (44; 244) connected to the inlet;
(d) means for separating the annular space (46; 282) in such a way that the lower filter section (66; 266) is connected to the inlet (16; 216) and flowed through from the outside towards the inside in the operating position and the upper filter section (68; 268) in the backflow position; and
(e) an impeller (100; 300) rotatable around the longitudinal axis of the filter element (44; 244) within the filter element (44; 244) wherein water flows from the inside towards the outside in the backflow position through a reduced angular range of the lower filter section (66; 266);
**characterized in that**
(f) the upper filter section (68; 268) has a smaller diameter than the lower filter section (66; 266), whereby an annular shoulder (70; 270) is formed between the upper and the lower filter section, and
(g) the impeller (100; 300) is fixed relative to the housing in an axial direction and is provided with a cylindric, upwardly open body having a diameter which is larger than the diameter of the upper filter section (66; 266) and smaller than the diameter of the lower filter section (68; 268).

2. Backflow filter according to claim 1, **characterized in that** the impeller (100; 300) has one or more flat jets (109, 111) on the outside of the cylindric body which are connected to the interior of the impeller.

3. Backflow filter according to claim 2, **characterized in that** the flat jets (109; 111) are integrated in the impeller (100; 300) in such a way that backflow water flowing outwards hits the lower filter section (66; 266) from the inside with an angle which is not 90°, preferably between 5° and 75° and most preferably between 30° and 50° relative to the tangent at the hitting point, whereby the backflow water will cause a rotation of the impeller.

4. Backflow filter according to claim 2 or 3, **characterized in that** a plurality of flat jets (109, 111) is provided which are displaced in an axial direction and covering the height of the lower filter section (66; 266).

5. Backflow filter according to claim 4, **characterized in that** the flat jets (109, 111) are displaced in an angular direction whereby lateral forces on the impeller are compensated.

6. Backflow filter according to any of the preceding claims, **characterized in that** the means for separating the annular space (46; 282) comprise an annular projection (72; 272) on the outside of the filter element (44; 244) between the upper filter section (68; 268) and the lower filter section (66; 266) cooperating with a shoulder (274) or an annular projection (74) on the inner wall of the filter cup (30; 230) or with a filter sleeve (260) surrounding the filter element (244) in such a way that
(i) the connection between the inlet and the annular space (46; 282) around the lower filter section (66; 266) is opened in an upper position of the filter element (44; 244) and blocked in a lower position of the filter element (44; 244); and
(ii) the connection between the inlet and the range (146; 255) around the upper filter section (68; 268) is blocked in the upper position of the filter element (44; 244) and opened in the lower position of the filter element (44; 244).

7. Backflow filter according to any of the preceding claims, **characterized by** a bottom (78) for closing the filter element (44) at its lower end and a spring biassing the filter element (44) with an upwardly acting spring force.

8. Backflow filter according to any of the preceding claims , **characterized by** am axially with the filter element (44; 244) moveable valve member (80, 42; 280) controlling the connection between the annular space (46; 282) around the lower filter section (66; 266) and the drain (94; 294), wherein the connection is closed in the operating position and open in the backflow position.

9. Backflow filter according to claim 8, **characterized by** one or more channels (60, 62) for connecting the range (146) outside the upper filter section (68) to the range below the lower filter section (66) and by a spring biassed lifting element (48) moveably guided in an axial direction between the bottom (78) and the valve member (80) which closes the channels (60) in an upper end position and an opening (108) provided in the valve member (80) in a lower end position, wherein the spring-bias acting on the filter element (44) is larger than the spring force acting on the lifting element.

10. Backflow filter according to any of the preceding claims, **characterized by** an outer rim (277) or socket (26) and a coaxial, inner sleeve (269) or a socket (32), wherein the interior (37) of the inner sleeve or the inner socket (32; 277) is connected to the outlet (16; 216) and the interior of the outer rim or socket (26) is connected to the inlet (14), and the inner sleeve (269) or the inner socket (26) extend at least up to the coaxially arranged filter element (44; 244).

11. Backflow filter according to any of the preceding claims, **characterized in that** the filter element (44) is provided with a plurality of vertical webs and at least a portion of the webs (54) are provided with a channel (60) connecting the range (146) outside of the upper filter section (68) to the range below the bottom (78) through a bore hole (62).

12. Backflow filter according to any of claims 1 to 11, **characterized in that** the filter element (244) is moveably guided in a filter sleeve (260) which is immobile relative to the housing.

## Revendications

1. Filtre de lavage à contre-courant destiné à filtrer de l'eau potable ou de l'eau industrielle qui, pour laver à contre-courant, peut être commuté d'une position de service dans laquelle de l'eau est guidée à travers le filtre (44, 244) depuis l'entrée (14;214) jusqu'à la sortie (16;216) dans une position de lavage à contre-courant dans laquelle de l'eau peut être guidée en sens inverse à travers le filtre (44, 244) depuis l'entrée (14;214) jusqu'à un déversoir (92;292) ouvert, comprenant :
(a) une pièce de robinetterie de raccordement (12;212) munie d'une entrée (14;214) et d'une sortie (16;216) ;
(b) une tasse de filtre (30;230) munie d'un déversoir (94;294) pouvant être fermé hermétiquement ;
(c) un élément de filtre (44;244) guidé entre une butée supérieure et une butée inférieure de sorte à pouvoir se déplacer axialement et muni d'une section de filtre supérieure (68;268) et d'une section de filtre inférieure (66;266) et d'un espace annulaire (46;282) pouvant être connecté à l'entrée et disposé autour de l'élément de filtre (44;244) ;
(d) des moyens destinés à séparer l'espace annulaire (46;282) de sorte que la section de filtre inférieure (66;266) peut être connectée à l'entrée (16;216) en position de service et la section de filtre supérieure (68;268) peut être connectée à l'entrée (16;216) en position de lavage à contre-courant en étant traversées par l'eau de l'extérieur vers l'intérieur ; et
(e) une roue (100;300) pouvant tourner autour de l'axe longitudinal de l'élément de filtre (44;244) et située à l'intérieur de l'élément de filtre (44;244) à travers laquelle de l'eau peut être guidée en position de lavage à contre-courant de l'intérieur vers l'extérieur en passant par une zone angulaire réduite de la section de filtre inférieure (66;266) ;
**caractérisé en ce que**
(f) la section de filtre supérieure (68;268) possède un diamètre inférieur à celui de la section de filtre inférieure (66;266) de sorte qu'il se forme un épaulement annulaire (70;270) entre la section de filtre supérieure et la section de filtre inférieure, et
(g) la roue (100;300) est fixe par rapport au boîtier dans le sens axial et présente un corps supérieur ouvert cylindrique dont le diamètre est supérieur au diamètre de la section de filtre supérieure (66;266) et inférieur au diamètre de la section de filtre inférieure (68;268).

2. Filtre de lavage à contre-courant selon la revendication 1, **caractérisé en ce que** la roue (100;300) présente une ou plusieurs buses plates (109, 111) sur la face externe du corps cylindrique connectées à l'espace intérieur de la roue.

3. Filtre de lavage à contre-courant selon la revendication 2, **caractérisé en ce que** les buses plates (109, 111) sont formées sur la roue (100;300) de sorte que de l'eau de lavage à contre-courant sortant frappe de biais de l'intérieur la section de filtre inférieure (66:266) sous un angle qui n'est pas égal à 90°, compris de préférence entre 5° et 75° et au mieux entre 30° et 50° par rapport à la tangente du point d'incidence de sorte que l'eau de lavage à contre-courant fait tourner la roue.

4. Filtre de lavage à contre-courant selon la revendication 2 ou 3, **caractérisé en ce qu'**il est prévu plusieurs buses plates (109, 111) décalées dans le sens axial qui couvrent la hauteur de la section de filtre inférieure (66;266).

5. Filtre de lavage à contre-courant selon la revendication 4, **caractérisé en ce que** les buses plates (109, 111) sont décalées angulairement dans le sens de la circonférence de sorte que les forces latérales exercées sur la roue sont compensées.

6. Filtre de lavage à contre-courant selon l'une quelconque des revendications précédentes, **caractérisé en ce que** les moyens destinés à séparer l'espace annulaire (46;282) comprennent une saillie annulaire (72;272) à l'extérieur sur l'élément de filtre (44;244) entre la section de filtre supérieure (68;268) et la section de filtre inférieure (66;266), concourant avec un épaulement (274) ou une saillie annulaire (74) sur la paroi intérieure de la tasse de filtre (30;230) ou une gaine de filtre (260) entourant l'élément de filtre (244) de sorte que
(i) la connexion allant de l'entrée jusqu'à l'espace annulaire (46;282) entourant la section de filtre inférieure (66;266) est ouverte quand l'élément de filtre (44;244) est en position haute et bloquée quand l'élément de filtre (44;244) est en position basse ;
(ii) la connexion allant de l'entrée jusqu'à la zone (146;255) entourant la section de filtre supérieure (68;268) est bloquée quand l'élément de filtre (44;244) est en position haute et ouverte quand l'élément de filtre (44;244) est en position basse.

7. Filtre de lavage à contre-courant selon l'une quelconque des revendications précédentes, **caractérisé par** un fond (78) destiné à fermer hermétiquement l'élément de filtre (44) à l'extrémité inférieure et un ressort dont la force pousse l'élément de filtre (44) vers le haut.

8. Filtre de lavage à contre-courant selon l'une quelconque des revendications précédentes, **caractérisé par** un membre de vanne (80, 42;280) pouvant se déplacer axialement avec l'élément de filtre (44;244) qui contrôle la connexion entre l'espace annulaire (46;282) entourant la section de filtre inférieure (66;266) et le déversoir (94;294), la connexion étant fermée en position de service et ouverte en position de lavage à contre-courant.

9. Filtre de lavage à contre-courant selon la revendication 8, **caractérisé par** un ou plusieurs canaux (60, 62) destinés à relier la zone (146) située à l'extérieur autour de la section de filtre supérieure (68) à la zone située en dessous de la section de filtre inférieure (66) et entre le fond (78) et le membre de vanne (80) et un élément de levage (48) sollicité par la force d'un ressort et guidé de sorte à pouvoir se déplacer axialement qui ferme hermétiquement les canaux (60) dans une position de fin de course haute et ferme hermétiquement un orifice (108) prévu dans le membre de vanne (80) dans une position de fin de course basse, la force du ressort agissant sur l'élément de filtre (44) étant supérieure à la force du ressort agissant sur l'élément de levage.

10. Filtre de lavage à contre-courant selon l'une quelconque des revendications précédentes, **caractérisé par** un bord extérieur (277) ou raccord (26) et une gaine (269) intérieure coaxiale ou un raccord (32), l'intérieur (37) de la gaine intérieure ou du raccord intérieur (32;277) étant relié à la sortie (16;216) et l'intérieur du bord extérieur ou raccord (26) étant relié à l'entrée (14), et la gaine intérieure (269) ou le raccord intérieur (26) s'étendant au moins jusqu'à l'élément de filtre (44;244) disposé sur le même axe que ce dernier.

11. Filtre de lavage à contre-courant selon l'une quelconque des revendications précédentes, **caractérisé en ce que** l'élément de filtre (44) présente plusieurs barres verticales (54) et au moins une partie des barres (54) est pourvue en plus d'un canal (60) qui, par l'intermédiaire d'un perçage (62), relie la zone (146) située à l'extérieur de la section de filtre supérieure (68) à la zone située en dessous du fond (78).

12. Filtre de lavage à contre-courant selon l'une quelconque des revendications 1 à 11, **caractérisé en ce que** l'élément de filtre (244) est guidé de manière à pouvoir se déplacer dans une gaine de filtre (260) fixe par rapport au boîtier.
